(19) Europäisches Patentamt
European Patent Office
Office européen des brevets

(11) **EP 3 954 793 A1**

(12) **EUROPEAN PATENT APPLICATION**

(43) Date of publication:
**16.02.2022 Bulletin 2022/07**

(21) Application number: **20190793.8**

(22) Date of filing: **12.08.2020**

(51) International Patent Classification (IPC):
**C22B 11/08** (2006.01)　　　　**B01D 19/04** (2006.01)
**C11D 1/722** (2006.01)　　　　**C11D 3/37** (2006.01)
**B03D 1/004** (2006.01)

(52) Cooperative Patent Classification (CPC):
**C22B 11/08; B01D 11/0288; B01D 19/0409;
B03D 1/0043; B03D 1/0046;** B03D 2203/025

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **CHT Germany GmbH
72072 Tübingen (DE)**

(72) Inventors:
• **Fischer-Sturm, Andrea
72072 Tübingen (DE)**

• **Witzel-Wilhelm, Heike
70272 Tübingen (DE)**
• **Siekmann Quevedo, Eric Carl
15510 Distrito San Antonio de Huarochirí (PE)**
• **Vester, Annegret
72072 Tübingen (DE)**
• **Santos Pérez, Sandra Malena
15510 Distrito San Antonio de Huarochirí (PE)**

(74) Representative: **Maiwald Patent- und
Rechtsanwaltsgesellschaft mbH
Elisenhof
Elisenstraße 3
80335 München (DE)**

(54) **COMPOSITION COMPRISING NON-IONIC SURFACTANT AND POLYETHER-MODIFIED SILOXANE AND ITS USE IN CYANIDE-LEACHING OF METAL ORES**

(57) The present invention relates to lixiviant medium for extracting gold from a gold-containing solid material, which lixiviant medium comprises a polyether-modified siloxane and a non-ionic surfactant. The present invention also relates to a method of extracting gold from a gold-containing solid material, to a composition from which said lixiviant medium can be prepared, to a method of preparing said lixiviant medium and to the use of said lixiviant medium for extracting gold from a a gold-containing solid material.

**EP 3 954 793 A1**

**Description**

**Technical Field**

The present invention relates to a composition comprising a non-ionic surfactant and a polyether siloxane, and aqueous solution of said composition, its use in cyanide-leaching, a method of ore processing comprising a step of contacting a metal ore with said aqueous solution of said composition, wherein said metal ore preferably is a gold-containing metal ore.

**Background of the Invention**

Gold is among the rarest elements in our world. Thus, for example, the proportion of gold in the solid Earth's crust is about 4 mg/t (4 ppb). Gold is also present in quartz rock in the form of lodes, veins, etc. Here, the gold is often accompanied by pyrites, arsenopyrite, copper ores and silver ores. Most gold occurs in elemental form, although most gold particles are macroscopically small. Gold is generally alloyed with silver but may also comprise copper, platinum and further metals as impurities. Some gold minerals are also found in nature. These are in particular tellurides, for example calaverite and krennerite ($AuTe_2$), sylvanite ($AgAuTe_4$), petzite ($Ag_3AuTe_2$) and nagyagite $[Pb_3(Pb,Sb)_3S_6](Au, Te)_3$.

Gold extraction is effected only rarely by gold washing. Today, substantially two industrial processes play an important role. For this purpose, gold-containing material is first extracted industrially by mining the ore, and the extracted gold-containing ore is subjected to (1) amalgamation or (2) cyanide leaching.

In amalgamation, the gold-containing rock is crushed in mills and mixed with water and mercury. The gold forms with the mercury an alloy (amalgam) from which the mercury can be separated off by distillation at 600 °C such that the gold remains. As a result of the process, about two thirds of the gold can be extracted from the rock.

In cyanide leaching, which is described, for example, in Ullmann's Encyclopedia, 6th Edition, 2000, Volume 4.2 (electronic version) or in Kirk-Othmer, Enzyclopedia of Chemical Technology, 3rd Edition, Vol. 11, pages 972-992, and vol. 21, pages 1 to 15, a sodium or potassium cyanide solution is added to the finely milled rock while supplying atmospheric oxygen and, if appropriate, in the presence of lime. The gold forms a complex cyanide compound according to the following equation:

$$Au + 8\ NaCN + O_2 + 2\ H_2O \rightarrow 4\ Na[Au(CN)_2] + 4\ NaOH$$

The pure gold can be recovered from the complex cyanide compound by reduction (for example using zinc turnings). The gold settles as a sponge on the bottom during this reduction. The precipitate is filtered, dried and roasted, then melted with the aid of a flux, such as borax, and cast into ingots. Alternative recovery processes are the selective adsorption onto active carbon (e.g. carbon in pulp process-CIP) or ion exchangers (e.g. resin in pulp process-RIP) with subsequent desorption using concentrated cyanide solution or zinc cyanate in the case of ion exchangers. The gold ions can be reduced from the cyanide complexes electrolytically or by adding zinc powder.

The cyanide leaching is preferably carried out as heap leaching. Gold-containing mineral material having a suitable particle size is formed into heaps of in general from 100 000 to 500 000 t and then sprayed from above with the cyanide liquor so that the cyanide liquor can percolate or trickle through the rock under the impact of gravity of earth. The mother liquor enriched with gold collects at the bottom of the heap.

The process most frequently carried out in practice is cyanide leaching, which utilizes the good complexing properties of cyanide ions for dissolving metallic gold and separating gold ions from their natural chemical partners in the ore.

Silver, too, is preferably extracted by the process of cyanide leaching, often together with gold. The material comminuted to a fine sludge which is leached with 0.1 to 0.2% strength sodium cyanide solution with thorough ventilation, both metallic silver and silver sulfide and silver chloride going into solution as dicyanoargentate (I):

$$2\ Ag + H_2O + ½\ O_2 + 4\ NaCN \rightarrow 2\ Na[Ag(CN)_2] + 2\ NaOH \qquad (1)$$

$$Ag_2S + 4\ NaCN \leftrightarrow 2\ Na[Ag(CN)_2] + Na_2S \qquad (2)$$

$$2\ AgCl + 4\ NaCN \rightarrow 2\ Na[Ag(CN)_2] + 2\ NaCl \qquad (3)$$

Since the reaction (2) leads to an equilibrium, the sodium sulfide $Na_2S$ formed in the leaching of sulfidic silver ores must be oxidized by blowing in air

$$2\ S^{2-} + 2\ O_2 + H_2O \rightarrow S_2O_3^{2-} + 2\ OH^-$$

or precipitated by adding lead salt

$$Pb^{2+} + S^{2-} \rightarrow PbS$$

and thus removed from the equilibrium. The (nobler) silver is precipitated from the resulting clear liquors by introducing (less noble) zinc or aluminum dust

$$2\ Na[Ag(CN)_2] + Zn \rightarrow Na_2[Zn(CN)_4] + 2\ Ag,$$

the slurry is then filtered through filter presses and the press cake thus obtained is melted.

However, conventional cyanide leaching has various disadvantages which call for improvements of the existing technology.

Large amounts of cyanide salts are required in the cyanide leaching for separating the metal from the metal-containing materials. For example for extracting gold or silver, up to 300 g of cyanide per metric ton of material are required, depending on the gold- or silver-containing material, it still not being possible to dissolve the gold or silver completely out of the starting material even when large amounts of cyanide salts are used. Usually, only from 60 to 90% of the gold or silver present are removed from the original material.

Owing to the high toxic effect of cyanide salts, such large amounts are moreover ecologically unsafe and pose a serious threat to man and wildlife.

Furthermore, cyanide leaching, which is frequently carried out as heap leaching, requires a considerable amount of time. Thus, the time which is required for a conventional leaching process is from 30 to 90 days, depending on the starting material.

In the prior art, the addition of surfactants to the cyanide liquor is recommended for improving the effectiveness of the cyanide leaching, with the result that the required amount of cyanide and the required duration of the cyanide leaching can be decreased and the achievable yield of gold or silver can be increased.

The efforts in providing corresponding improvements have become visible in the prior art such as in US 2008/0196546 A1 (corresponding to WO 2006/069738 A1; BASF AG) and the prior art cited therein. Thus, it is taught in US 2008/0196546 A1 to incorporate at least one non-ionic surfactant in an amount of 0.01-0.2 % by weight into the aqueous cyanide-containing composition in order to increase the yields of metal, in particular of gold and/or silver, based on the starting material used, and, furthermore, reduce the required duration of leaching and the amount of cyanide required for leaching. Alkyl alcohol alkoxylates, alkylphenol alkoxylates, alkylpolyglucosides, N-alkylpolyglucosides, N-alkylglucamides, are mentioned as being suitable non-ionic surfactants with alkyl alkoxylates or mixtures of alkyl alkoxylates being particularly suitable.

Similarly, in order to provide an improved process for leaching of metal from ore heaps US 2003/0192403 A1 (P. Burgmayer) describes the use of surfactants as extraction assistants in gold extraction. The surfactants used are ethoxylated aliphatic alcohols and are referred to as "drainage aids". The document also mentions that silicone glycol copolymers were tested as such drainage aids which were found to have no effect, however.

WO 2014/170448 A1 (Akzo Nobel Chemicals International B.V.) describes a process for recovery of precious metals from ores or concentrates containing refractory carbonaceous material by cyanidation leaching in which process at least one cationic surfactant is added before or during the addition of cyanide-containing solution in order to improve the recovery of precious metals by cyanidation from carbonaceous ores.

Despite these efforts, the need for a more efficient method of extracting a desired metal from a metal ore containing said desired metal by cyanide leaching persists. This need in particular results from the considerable toxicity of cyanide ions to many living organisms, including mammals, birds, fish and aquatic invertebrates.

Therefore, it is an object of the present invention to provide a method of extracting gold from a gold-containing solid material by cyanide leaching,

which method is more efficient as regards

(i) the required amount of cyanide, and/or
(ii) the amount of gold extracted from the gold-containing solid material, and/or
(iii) the time required for extracting gold from the gold-containing solid material.

In particular, it is an object of the present invention to provide such a method of extracting gold from a gold-containing solid material by cyanide leaching, wherein said gold-containing solid material is a metal ore.

**Brief Description of the Invention**

Surprisingly, it was found that the drawbacks inherent in the prior art can be overcome and the aforementioned object can be achieved by providing a method of extracting gold from a gold-containing solid material in which a specific lixiviant medium is used. Thus, the invention described in the following was completed.

In a first aspect, the present invention is directed to the provision of a composition comprising a non-ionic surfactant and a polyether-modified siloxane.

In a second aspect, the present invention is directed to the provision of a method of preparing a lixiviant medium from said composition according to the first aspect of the invention.

In a third aspect, the present invention is directed to the provision of a lixiviant medium comprising a composition according to the first aspect of the invention, cyanide ions and water.

In a fourth aspect, the present invention is directed to the provision of a method of extracting gold from a gold-containing solid material, said method comprising the steps of

(i) contacting a gold-containing solid material in the presence of an oxidizing agent with a lixiviant medium according to the second aspect of the invention such that a mother liquor enriched in gold cyanide complexes and a solid material having a reduced content of gold are obtained;
(ii) separating the mother liquor obtained in step (i) from the solid material having a reduced content of gold.

In a fifth aspect, the present invention is directed to the use of a composition according to the first aspect of the present invention in a method of extracting gold from a gold-containing solid material.

The invention is described in detail in the following.

**Detailed Description of the Invention**

In particular, the present invention encompasses the following embodiments.

[1.1] Composition comprising a non-ionic surfactant and a polyether-modified siloxane.

[1.2] Composition as defined under item [1.1], wherein the polyether-modified siloxane consists of structural units selected from the group consisting of type (I), (II), (III), and (IV),

$$[\text{mod-Si}(R^1)_2\text{-}]_{t1} \qquad (I)$$

,

$$[(R^1)_3\text{Si-}]_{t2} \qquad (II)$$

,

$$[\text{-O-Si(mod)}(R^1)\text{-}]_m \qquad (III)$$

,

$$[\text{-O-Si}(R^1)_2\text{-}]_n, \qquad (IV)$$

, wherein

mod represents $-L-O-[-A_x{\sim}B_y{\sim}C_z\text{-}]^{\#}-R^2$, wherein
A represents a structural unit having the formula $-CH(R^3)-CH(R^4)-O-$,
B represents a structural unit having the formula $-CH_2-CH_2-O-$,
C represents a structural unit having the formula $-CH(R^5)-CH(R^6)-O-$,
x represents the number of the structural units of A and takes a value in the range of 0-50,
y represents the number of the structural units of B and takes a value in the range of 0-50,
z represents the number of the structural units of C and takes a value in the range of 0-50, wherein $x + y + z > 1$,
$[-A_x{\sim}B_y{\sim}C_z\text{-}]^{\#}$ is independently selected in each occurrence from the group consisting of

• a copolymer consisting of x structural units A, y structural units B and z structural units C arranged in

4

a statistical sequence,

- a copolymer consisting of structural units $A_x$, $B_y$ and $C_z$ arranged in a block structure represented by (@LO)-($A_x$)-($B_y$)-($C_z$)-(@$R^2$),
- a copolymer consisting of structural units $A_x$, $B_y$ and $C_z$ arranged in a block structure represented by (@LO)-($C_z$)-($B_y$)-($A_x$)-(@$R^2$),
- a copolymer consisting of structural units $A_x$, $B_y$ and $C_z$ arranged in a block structure represented by (@LO)-($A_x$)-($C_z$)-($B_y$)-(@$R^2$),
- a copolymer consisting of structural units $A_x$, $B_y$ and $C_z$ arranged in a block structure represented by (@LO)-($B_y$)-($C_z$)-($A_x$)-(@$R^2$),
- a copolymer consisting of structural units $A_x$, $B_y$ and $C_z$ arranged in a block structure represented by (@LO)-($C_z$)-($A_x$)-($B_y$)-(@$R^2$), and
- a copolymer consisting of structural units $A_x$, $B_y$ and $C_z$ arranged in a block structure represented by (@LO)-($B_y$)-($A_x$)-($C_z$)-(@$R^2$),

wherein (@LO) indicates the terminus of the copolymer that is bonded to the structural unit represented by -L-O- and (@$R^2$) indicates the terminus of the copolymer that is bonded to the structural unit represented by -$R^2$,

L is a single bond or a linear or branched alkylene group having 1-10 carbon atoms,

$R^2$ represents H, a linear or branched alkyl group having 1-6 carbon atoms or a group -C(=O)-$R^7$, wherein $R^7$ represents a linear or branched alkyl group having 1-6 carbon atoms,

one of $R^3$ and $R^4$ represents H and the other one represents a methyl group,

one of $R^5$ and $R^6$ represents H and the other one represents a linear or branched alkyl group having 2 or 3 carbon atoms, and

$R^1$    independently represents a linear or branched alkyl chain having 1-6 carbon atoms,

m    represents the number of the structural units of formula (III) present in the polyether-modified siloxane and takes a value in the range of 0-100,

n    represents the number of the structural units of formula (IV) present in the polyether-modified siloxane and takes a value in the range of 0-500,

t1    represents the number of the structural units of formula (I) present in the polyether-modified siloxane and takes a value in the range of 0-2,

t2    represents the number of the structural units of formula (II) present in the polyether-modified siloxane and takes a value in the range of 0-2,

wherein

t1 + t2 = 2,
t1 + m $\geq$ 1, and
m + n $\geq$ 1.

[1.3] Composition as defined under item [1.2], wherein L represents a single bond.

[1.4] Composition as defined under item [1.2], wherein L represents a linear or branched alkylene group having 2-6 carbon atoms.

[1.5] Composition as defined under item [1.2], wherein L represents a linear or branched alkylene group having 3 or 4 carbon atoms.

[1.6] Composition as defined under item [1.2], wherein L represents a linear alkylene group having 3 carbon atoms.

[1.7] Composition as defined under any one of items [1.2]-[1.6], wherein $R^1$ independently represents a linear or branched alkyl chain having 1-4 carbon atoms .

[1.8] Composition as defined under any one of items [1.2]-[1.6], wherein $R^1$ is independently selected from the group consisting of methyl, ethyl, n-propyl, and iso-propyl.

[1.9] Composition as defined under any one of items [1.2]-[1.6], wherein $R^1$ is methyl.

[1.10] Composition as defined under any one of items [1.2]-[1.9], wherein $R^2$ represents H.

[1.11] Composition as defined under any one of items [1.2]-[1.9], wherein $R^2$ represents a linear or branched alkyl group having 1-4 carbon atoms.

[1.12] Composition as defined under any one of items [1.2]-[1.9], wherein $R^2$ is selected from the group consisting of methyl, ethyl, n-propyl, and iso-propyl.

[1.13] Composition as defined under any one of items [1.2]-[1.9], wherein $R^2$ is selected from the group consisting of n-butyl, sec-butyl, iso-butyl, and tert-butyl.

[1.14] Composition as defined under any one of items [1.2]-[1.9], wherein $R^2$ represents a group $-C(=O)-R^7$, wherein $R^7$ represents a linear or branched alkyl group having 1-4 carbon atoms.

[1.15] Composition as defined under any one of items [1.2]-[1.9], wherein $R^2$ represents a group $-C(=O)-R^7$, wherein $R^7$ is selected from the group consisting of methyl, ethyl, n-propyl, and iso-propyl.

[1.16] Composition as defined under any one of items [1.2]-[1.9], wherein $R^2$ represents a group $-C(=O)-R^7$, wherein $R^7$ is methyl.

[1.17] Composition as defined under any one of items [1.2]-[1.16], wherein one of $R^5$ and $R^6$ represents H and the other one represents ethyl.

[1.18] Composition as defined under any one of items [1.2]-[1.16], wherein one of $R^5$ and $R^6$ represents H and the other one represents n-propyl.

[1.19] Composition as defined under any one of items [1.2]-[1.16], wherein one of $R^5$ and $R^6$ represents H and the other one represents iso-propyl.

[1.20] Composition as defined under any one of items [1.2]-[1.19], wherein x is 0.

[1.21] Composition as defined under any one of items [1.2]-[1.19], wherein x represents a value in the range of 1-40.

[1.22] Composition as defined under any one of items [1.2]-[1.19], wherein x represents a value in the range of 10-35.

[1.23] Composition as defined under any one of items [1.2]-[1.19], wherein x represents a value in the range of 20-30.

[1.24] Composition as defined under any one of items [1.2]-[1.23], wherein y is 0.

[1.25] Composition as defined under any one of items [1.2]-[1.23], wherein y represents a value in the range of 1-40.

[1.26] Composition as defined under any one of items [1.2]-[1.23], wherein y represents a value in the range of 10-35.

[1.27] Composition as defined under any one of items [1.2]-[1.23], wherein y represents a value in the range of 20-30.

[1.28] Composition as defined under any one of items [1.2]-[1.27], wherein z is 0.

[1.29] Composition as defined under any one of items [1.2]-[1.27], wherein z represents a value in the range of 1-40.

[1.30] Composition as defined under any one of items [1.2]-[1.27], wherein z represents a value in the range of 10-35.

[1.31] Composition as defined under any one of items [1.2]-[1.27], wherein y represents a value in the range of 20-30.

[1.32] Composition as defined under any one of items [1.2]-[1.19], wherein x, y, and z fulfil the relation $5 \leq x + y + z \leq 40$.

[1.33] Composition as defined under any one of items [1.2]-[1.19], wherein x, y, and z fulfil the relation $10 \leq x + y + z \leq 35$.

[1.34] Composition as defined under any one of items [1.2]-[1.19], wherein x, y, and z fulfil the relation $20 \leq x + y + z \leq 30$.

[1.35] Composition as defined under any one of items [1.2]-[1.19], wherein z = 0 and x and y fulfil the relation $5 \leq x$

+ y ≤ 40.

[1.36] Composition as defined under any one of items [1.2]-[1.19], wherein z = 0 and x and y fulfil the relation 10 ≤ x + y ≤ 35.

[1.37] Composition as defined under any one of items [1.2]-[1.19], wherein z = 0 and x and y fulfil the relation 20 ≤ x + y ≤ 30.

[1.38] Composition as defined under any one of items [1.2]-[1.19], wherein z = 0 and x and y fulfil the relation 5 ≤ y/x ≤ 20.

[1.39] Composition as defined under any one of items [1.2]-[1.19], wherein z = 0 and x and y fulfil the relation 10 ≤ y/x ≤ 15.

[1.40] Composition as defined under any one of items [1.2]-[1.39], wherein m represents a value in the range of 1-100.

[1.41] Composition as defined under any one of items [1.2]-[1.39], wherein m represents a value in the range of 2-50.

[1.42] Composition as defined under any one of items [1.2]-[1.39], wherein m represents a value in the range of 3-30.

[1.43] Composition as defined under any one of items [1.2]-[1.42], wherein n represents a value in the range of 1-400.

[1.44] Composition as defined under any one of items [1.2]-[1.42], wherein n represents a value in the range of 5-200.

[1.45] Composition as defined under any one of items [1.2]-[1.42], wherein n represents a value in the range of 10-100.

[1.46] Composition as defined under any one of items [1.2]-[1.42], wherein n represents a value in the range of 15-60.

[1.47] Composition as defined under any one of items [1.2]-[1.42], wherein n represents a value in the range of 20-40.

[1.48] Composition as defined under any one of items [1.2]-[1.47], wherein n and m fulfil the relation 5 ≤ n/m ≤ 20.

[1.49] Composition as defined under any one of items [1.2]-[1.47], wherein n and m fulfil the relation 10 ≤ n/m ≤ 15.

[1.50] Composition as defined under any one of items [1.2]-[1.49], wherein n and m fulfil the relation 15 ≤ n + m ≤ 150.

[1.51] Composition as defined under any one of items [1.2]-[1.49], wherein n and m fulfil the relation 15 ≤ n + m ≤ 100.

[1.52] Composition as defined under any one of items [1.2]-[1.49], wherein n and m fulfil the relation 20 ≤ n + m ≤ 80.

[1.53] Composition as defined under any one of items [1.2]-[1.52], wherein t1 is 0.

[1.54] Composition as defined under any one of items [1.2]-[1.52], wherein t1 is 1.

[1.55] Composition as defined under any one of items [1.2]-[1.52], wherein t1 is 2.

[1.56] Composition as defined under item [1.54] or [1.55], wherein m ≥ 1.

[1.57] Composition as defined under any one of items [1.2]-[1.56], wherein $[-A_x \sim B_y \sim C_z-]^{\#}$ represents a copolymer in which x structural units A, y structural units B and z structural units C are arranged in a statistical sequence.

[1.58] Composition as defined under any one of items [1.2]-[1.56], wherein $[-A_x \sim B_y \sim C_z-]^{\#}$ represents a copolymer in which $A_x$, $B_y$ and $C_z$ are arranged in a block structure represented by $(@LO)-(A_x)-(B_y)-(C_z)-(@R^2)$.

[1.59] Composition as defined under any one of items [1.2]-[1.56], wherein $[-A_x \sim B_y \sim C_z-]^{\#}$ represents a copolymer in which $A_x$, $B_y$ and $C_z$ are arranged in a block structure represented by $(@LO)-(C_z)-(B_y)-(A_x)-(@R^2)$.

[1.60] Composition as defined under any one of items [1.2]-[1.56], wherein $[-A_x \sim B_y \sim C_z-]^{\#}$ represents a copolymer

in which $A_x$, $B_y$ and $C_z$ are arranged in a block structure represented by $(@LO)-(A_x)-(C_z)-(B_y)-(@R^2)$.

[1.61] Composition as defined under any one of items [1.2]-[1.56], wherein $[-A_x\sim B_y\sim C_z-]^\#$ represents a copolymer in which $A_x$, $B_y$ and $C_z$ are arranged in a block structure represented by $(@LO)-(B_y)-(C_z)-(A_x)-(@R^2)$.

[1.62] Composition as defined under any one of items [1.2]-[1.56], wherein $[-A_x\sim B_y\sim C_z-]^\#$ represents a copolymer in which $A_x$, $B_y$ and $C_z$ are arranged in a block structure represented by $(@LO)-(C_z)-(A_x)-(B_y)-(@R^2)$.

[1.63] Composition as defined under any one of items [1.2]-[1.56], wherein $[-A_x\sim B_y\sim C_z-]^\#$ represents a copolymer in which $A_x$, $B_y$ and $C_z$ are arranged in a block structure represented by $(@LO)-(B_y)-(A_x)-(C_z)-(@R^2)$.

[1.64] Composition as defined under item [1.2], wherein
x represents a value in the range of 20-30,
y represents a value in the range of 0-5,
z represents 0,
L represents a linear alkylene group having 3 carbon atoms,
$R^1$ represents methyl,
$R^2$ is selected from H, and a linear or branched alkyl group having 1-4 carbon atoms,
m represents 1-5,
n represents 20-30,
t1 represents 2,
t2 represents 0.

[1.65] Composition as defined under item [1.64], wherein
y represents a value in the range of 1-5,
$R^2$ is represents H, and
$[-A_x\sim B_y\sim C_z-]^\#$ represents a copolymer in which $A_x$, $B_y$ and $C_z$ are arranged in a block structure represented by $(@LO)-(B_y)-(C_z)-(A_x)-(@R^2)$.

[1.66] Composition as defined under item [1.64], wherein
y represents a value in the range of 1-5,
$R^2$ is represents H, and
$[-A_x\sim B_y\sim C_z-]^\#$ in each occurrence represents a copolymer consisting of x structural units A, y structural units B and z structural units C arranged in a statistical sequence or a copolymer in which $A_x$, $B_y$ and $C_z$ are arranged in a block structure represented by $(@LO)-(B_y)-(C_z)-(A_x)-(@R^2)$.

[1.67] Composition as defined under item [1.64], wherein
y represents 0, and
$R^2$ is represents a linear or branched alkyl group having 4 carbon atoms.

[1.68] Composition as defined under item [1.64], wherein
y represents 0, and
$R^2$ is represents a linear alkyl group having 4 carbon atoms.

[1.69] Composition as defined under any one of items [1.1]-[1.68], wherein the non-ionic surfactant has a chemical constitution according to general formula (V)

$$R^8-O-[-D_p\sim E_q\sim F_r-]^\#- H \qquad (V)$$

, wherein

| | |
|---|---|
| $R^8$ | represents a linear or branched alkyl group having 4-22 carbon atoms, |
| D | represents a structural unit having the formula $-CH(R^9)-CH(R^{10})-O-$, |
| E | represents a structural unit having the formula $-CH_2-CH_2-O-$, |
| F | represents a structural unit having the formula $-CH(R^{11})-CH(R^{12})-O-$, |
| p | represents the number of structural units D and takes a value in the range of 0-10, |
| q | represents the number of structural units E and takes a value in the range of 3-50, |
| r | represents the number of structural units F and takes a value in the range of 0-40, |

| | |
|---|---|
| one of $R^9$ and $R^{10}$ | represents H and the other one represents a linear or branched alkyl group having 1-4 carbon atoms, |
| one of $R^{11}$ and $R^{12}$ | represents H and the other one represents a linear or branched alkyl group having 1-4 carbon atoms, |
| $[-D_p\sim E_q\sim F_r-]^\#$ | is independently selected in each occurrence from the group consisting of |

- a copolymer consisting of p structural units D, q structural units E and r structural units F arranged in a statistical sequence,
- a copolymer consisting of structural units $D_p$, $E_q$ and $F_r$ arranged in a block structure represented by $(@R^8O)-(D_p)-(E_q)-(F_r)-(@H)$,
- a copolymer consisting of structural units $A_x$, $B_y$ and $C_z$ arranged in a block structure represented by $(@R^8O)-(F_r)-(E_q)-(D_p)-(@H)$,
- a copolymer consisting of structural units $A_x$, $B_y$ and $C_z$ arranged in a block structure represented by $(@R^8O)-(D_p)-(F_r)-(E_q)-(@H)$,
- a copolymer consisting of structural units $A_x$, $B_y$ and $C_z$ arranged in a block structure represented by $(@R^8O)-(E_q)-(F_r)-(D_p)-(@H)$,
- a copolymer consisting of structural units $A_x$, $B_y$ and $C_z$ arranged in a block structure represented by $(@R^8O)-(F_r)-(D_p)-(E_q)-(@H)$, and
- a copolymer consisting of structural units $A_x$, $B_y$ and $C_z$ arranged in a block structure represented by $(@R^8O)-(E_q)-(D_p)-(F_r)-(@H)$,

wherein $(@R^8O)$ indicates the terminus of the copolymer that is bonded to the structural unit represented in formula (V) by $R^8O-$ and $(@H)$ indicates the terminus of the copolymer that is bonded to the structural unit represented in formula (V) by -H.

[1.70] Composition as defined under item [1.69], wherein $R^8$ is a linear or branched alkyl group having 8-18 carbon atoms.

[1.71] Composition as defined under item [1.69], wherein $R^8$ is a linear or branched alkyl group having 10-16 carbon atoms.

[1.72] Composition as defined under item [1.69], wherein $R^8$ is a linear or branched alkyl group having 11-13 carbon atoms.

[1.73] Composition as defined under any one of items [1.69]-[1.72], wherein $R^8$ is a linear alkyl group.

[1.74] Composition as defined under any one of items [1.69]-[1.72], wherein $R^8$ is a branched alkyl group.

[1.75] Composition as defined under any one of items [1.69]-[1.74], wherein p takes a value in the range of 0-5.

[1.76] Composition as defined under any one of items [1.69]-[1.74], wherein p is 0.

[1.77] Composition as defined under any one of items [1.69]-[1.76], wherein q takes a value in the range of 4-20.

[1.78] Composition as defined under any one of items [1.69]-[1.76], wherein q takes a value in the range of 5-15.

[1.79] Composition as defined under any one of items [1.69]-[1.78], wherein r takes a value in the range of 1-25.

[1.80] Composition as defined under any one of items [1.69]-[1.78], wherein r takes a value in the range of 2-15.

[1.81] Composition as defined under any one of items [1.69]-[1.78], wherein r is 0.

[1.82] Composition as defined under any one of items [1.69]-[1.81], wherein p is 0 and q and r fulfil the relation $2 \leq q + r \leq 25$.

[1.83] Composition as defined under any one of items [1.69]-[1.81], wherein p is 0 and q and r fulfil the relation $5 \leq q + r \leq 15$.

[1.84] Composition as defined under any one of items [1.69]-[1.83], wherein one of $R^9$ and $R^{10}$ represents H and the other one represents a linear or branched alkyl group having 1-3 carbon atoms.

[1.85] Composition as defined under any one of items [1.69]-[1.83], wherein one of $R^9$ and $R^{10}$ represents H and the other one represents an alkyl group selected from the group consisting of methyl, ethyl, n-propyl, and iso-propyl.

[1.86] Composition as defined under any one of items [1.69]-[1.83], wherein one of $R^9$ and $R^{10}$ represents H and the other one represents methyl.

[1.87] Composition as defined under any one of items [1.69]-[1.86], wherein one of $R^{11}$ and $R^{12}$ represents H and the other one represents a linear or branched alkyl group having 1-3 carbon atoms.

[1.88] Composition as defined under any one of items [1.69]-[1.86], wherein one of $R^{11}$ and $R^{12}$ represents H and the other one represents an alkyl group selected from the group consisting of methyl, ethyl, n-propyl, and iso-propyl.

[1.89] Composition as defined under any one of items [1.69]-[1.86], wherein one of $R^{11}$ and $R^{12}$ represents H and the other one represents methyl.

[1.90] Composition as defined under item [1.69], wherein
$R^8$ represents is a linear or branched alkyl group having 11-13 carbon atoms,
one of $R^9$ and $R^{10}$ represents H and the other one represents methyl,
p represents a value in the range of 0-10,
q represents a value in the range of 5-15, and
r is 0.

[1.91] Composition as defined under item [1.90], wherein $R^8$ represents a branched alkyl group.

[1.92] Composition as defined under item [1.90] or [1.91], wherein
p is 0 and
q represents a value in the range of 5-10.

[1.93] Composition as defined under item [1.90] or [1.91], wherein
p represents a value in the range of 1-5,
q represents a value in the range of 5-10.

[1.94] Composition as defined under item [1.69], wherein the non-ionic surfactant is a combination of a compound of formula (Va) and a compound of formula (Vb),

$$R^8\text{-O-}[\text{-}D_p\text{~}E_q\text{-}]^{\#}\text{-H} \qquad (Va)$$

,

$$R^8\text{-O-}E_q\text{-H} \qquad (Vb)$$

, wherein

$R^8$ represents is a branched alkyl group having 11-13 carbon atoms,
one of $R^9$ and $R^{10}$ represents H and the other one represents methyl,
p represents a value in the range of 0-10,
q represents a value in the range of 5-15.

[1.95] Composition as defined under item [1.94], wherein the compound of formula (Va) and the compound of formula (Vb) are present in a weight ratio of (Vb) : (Va) in the range of 2-5.

[1.96] Composition as defined under item [1.94], wherein the compound of formula (Va) and the compound of formula (Vb) are present in a weight ratio of (Vb) : (Va) in the range of 3-4.

[1.97] Composition as defined under any one of items [1.2]-[1.96], wherein the composition contains

50-98 wt.-% of said non-ionic surfactant and
2-50 wt.-% of said polyether-modified siloxane,
relative to the total weight of said non-ionic surfactant and said polyether-modified siloxane.

[1.98] Composition as defined under any one of items [1.2]-[1.96], wherein the composition contains
60-90 wt.-% of said non-ionic surfactant and
10-40 wt.-% of said polyether-modified siloxane,
relative to the total weight of said non-ionic surfactant and said polyether-modified siloxane.

[1.99] Composition as defined under any one of items [1.2]-[1.96], wherein the composition contains
70-85 wt.-% of said non-ionic surfactant and
15-30 wt.-% of said polyether-modified siloxane,
relative to the total weight of said non-ionic surfactant and said polyether-modified siloxane.

[1.100] Composition as defined under any one of items [1.2]-[1.96], wherein the composition contains
75-85 wt.-% of said non-ionic surfactant and
15-25 wt.-% of said polyether-modified siloxane,
relative to the total weight of said non-ionic surfactant and said polyether-modified siloxane.

[1.101] Composition as defined under any one of items [1.2]-[1.96], wherein the composition contains
5-88 wt.-% of a non-ionic surfactant of formula (Va) according to item [1.94],
10-90 wt.-% of a non-ionic surfactant of formula (Vb) according to item [1.94],
2-50 wt.-% of said polyether-modified siloxane,
relative to the total weight of said non-ionic surfactant and said polyether-modified siloxane.

[1.102] Composition as defined under any one of items [1.2]-[1.96], wherein the composition contains
10-40 wt.-% of a non-ionic surfactant of formula (Va) according to item [1.94],
20-80 wt.-% of a non-ionic surfactant of formula (Vb) according to item [1.94],
10-40 wt.-% of said polyether-modified siloxane,
relative to the total weight of said non-ionic surfactant and said polyether-modified siloxane.

[1.103] Composition as defined under any one of items [1.2]-[1.96], wherein the composition contains
15-30 wt.-% of a non-ionic surfactant of formula (Va) according to item [1.94],
40-70 wt.-% of a non-ionic surfactant of formula (Vb) according to item [1.94],
15-30 wt.-% of said polyether-modified siloxane,
relative to the total weight of said non-ionic surfactant and said polyether-modified siloxane.

[1.104] Composition as defined under any one of items [1.2]-[1.96], wherein the composition contains
15-30 wt.-% of a non-ionic surfactant of formula (Va) according to item [1.94],
45-70 wt.-% of a non-ionic surfactant of formula (Vb) according to item [1.94],
15-25 wt.-% of said polyether-modified siloxane,
relative to the total weight of said non-ionic surfactant and said polyether-modified siloxane.

[1.105] Composition as defined under any one of items [1.2]-[1.104], wherein the composition contains 25 wt.-% or less of water, relative to the total weight of said non-ionic surfactant and said polyether-modified siloxane.

[1.106] Composition as defined under any one of items [1.2]-[1.104], wherein the composition contains 5-20 wt.-% of water, relative to the total weight of said non-ionic surfactant and said polyether-modified siloxane.

[1.107] Composition as defined under any one of items [1.2]-[1.104], wherein the composition contains 7-15 wt.-% of water, relative to the total weight of said non-ionic surfactant and said polyether-modified siloxane.

[2.1] Method of preparing a lixiviant medium comprising the step of mixing

   (i) a composition as defined under any one of items [1.1]-[1.107],
   (ii) an alkali metal cyanide,
   (iii) a pH regulator suitable setting the pH of the composition to a value of 9 or higher, and
   (iv) water.

[2.2] Method of preparing a lixiviant medium as defined under item [2.1], wherein the alkali metal cyanide is sodium cyanide, potassium cyanide or a mixture of these.

[2.3] Method of preparing a lixiviant medium as defined under item [2.1] or [2.2], wherein the pH regulator is a calcium oxide, calcium hydroxide or a mixture of these.

[2.4] Method of preparing a lixiviant medium as defined under item [2.1] or [2.2], wherein the pH regulator is a calcium oxide, calcium hydroxide or a mixture of these.

[2.5] Method of preparing a lixiviant medium as defined under any one of items [2.1]-[2.4], wherein said composition (i) is admixed to an aqueous solution of said alkali metal cyanide (ii) and said pH regulator (iii).

[2.6] Method of preparing a lixiviant medium as defined under any one of items [2.1]-[2.4], wherein said composition (i) is mixed with water prior to being admixed to an aqueous solution of said alkali metal cyanide (ii) and said pH regulator (iii).

[3.1] Lixiviant medium comprising

    (i) a composition as defined under any one of items [1.1]-[1.107],
    (ii) an alkali metal cyanide,
    (iii) a pH regulator suitable setting the pH of the composition to a value of 9 or higher, and
    (iv) water.

[3.2] Lixiviant medium as defined under item [3.1], wherein the alkali metal cyanide is sodium cyanide, potassium cyanide or a mixture of these.

[3.3] Lixiviant medium as defined under item [3.1] or [3.2], wherein the pH regulator is a calcium oxide, calcium hydroxide or a mixture of these.

[3.4] Lixiviant medium as defined under any one items [3.1]-[3.3], wherein the lixiviant medium has a pH of 9 or higher.

[3.5] Lixiviant medium as defined under any one items [3.1]-[3.3], wherein the lixiviant medium has a pH of 10 or higher.

[3.6] Lixiviant medium as defined under any one items [3.1]-[3.3], wherein the lixiviant medium has a pH of 10.5 or higher.

[3.7] Lixiviant medium as defined under any one items [3.1]-[3.6], wherein the content of said alkali metal cyanide is in the range of 50 ppm or higher relative to the total weight of the lixiviant medium.

[3.8] Lixiviant medium as defined under any one items [3.1]-[3.6], wherein the content of said alkali metal cyanide is in the range of 70-1000 ppm relative to the total weight of the lixiviant medium.

[3.9] Lixiviant medium as defined under any one items [3.1]-[3.6], wherein the content of said alkali metal cyanide is in the range of 90-500 ppm relative to the total weight of the lixiviant medium.

[3.10] Lixiviant medium as defined under any one items [3.1]-[3.6], wherein the content of said alkali metal cyanide is in the range of 100-250 ppm relative to the total weight of the lixiviant medium.

[3.11] Lixiviant medium as defined under any one items [3.1]-[3.10], wherein the content of said composition (i) is in the range of 10-100 ppm relative to the total weight of the lixiviant medium.

[3.12] Lixiviant medium as defined under any one items [3.1]-[3.10], wherein the content of said composition (i) is in the range of 20-80 ppm relative to the total weight of the lixiviant medium.

[3.13] Lixiviant medium as defined under any one items [3.1]-[3.10], wherein the content of said composition (i) is in the range of 25-60 ppm relative to the total weight of the lixiviant medium.

[3.14] Lixiviant medium as defined under any one items [3.1]-[3.10], wherein the content of said composition (i) is in the range of 25-50 ppm relative to the total weight of the lixiviant medium.

[3.15] Lixiviant medium as defined under any one items [3.1]-[3.14], wherein the content of said composition (i) and said alkali metal cyanide is 5000 ppm or less relative to the total weight of the lixiviant medium.

[3.16] Lixiviant medium as defined under any one items [3.1]-[3.14], wherein the content of said composition (i) and said alkali metal cyanide is 3000 ppm or less relative to the total weight of the lixiviant medium.

[3.17] Lixiviant medium as defined under any one items [3.1]-[3.14], wherein the content of said composition (i) and said alkali metal cyanide is 2000 ppm or less relative to the total weight of the lixiviant medium.

[3.18] Lixiviant medium as defined under any one items [3.1]-[3.14], wherein the content of said composition (i) and said alkali metal cyanide is 1000 ppm or less relative to the total weight of the lixiviant medium.

[3.19] Lixiviant medium as defined under any one items [3.1]-[3.14], wherein the content of said composition (i) and said alkali metal cyanide is 500 ppm or less relative to the total weight of the lixiviant medium.

[4.1] Method of extracting gold from a gold-containing solid material, said method comprising the steps of

> (a) contacting a gold-containing solid material in the presence of an oxidizing agent with a lixiviant medium as defined under any one of items [3.1]-[3.19] such that a mother liquor enriched in a gold cyanide compound and a solid material having a reduced content of gold are obtained;
> (b) separating the mother liquor obtained in step (i) from the solid material having a reduced content of gold.

[4.2] Method of extracting gold as defined under item [4.1], wherein said gold-containing solid material is a mineral material.

[4.3] Method of extracting gold as defined under item [4.1] or [4.2], wherein said gold-containing solid material contains gold in a form selected from the group consisting of elemental gold in particulate form, a gold alloy, a gold mineral, and a combination of these.

[4.4] Method of extracting gold as defined under any one of items [4.1]-[4.3], wherein said gold-containing solid material contains gold in the form of an alloy comprising gold and at least one metal selected from the group consisting of silver, copper, nickel, cobalt, ruthenium, rhodium, palladium, osmium, iridium, and platinum.

[4.5] Method of extracting gold as defined under any one of items [4.1]-[4.3], wherein said gold-containing solid material contains gold in the form of a gold mineral selected from the group consisting of calaverite, krennerite, sylvanite, petzite, nagyagite, bezsmertnovit, maldonite, bogdanovit, anyulite, auricupride, aurostilbite, hunchunite, novodneprite, tetra-auricupride, uytenbogaardite, weishanite, and yuanjiangite.

[4.6] Method of extracting gold as defined under any one of items [4.1]-[4.5], wherein said gold-containing solid material contains gold in an amount of 100 ppm or higher.

[4.7] Method of extracting gold as defined under any one of items [4.1]-[4.5], wherein said gold-containing solid material contains gold in an amount of 250 ppm or higher.

[4.8] Method of extracting gold as defined under any one of items [4.1]-[4.5], wherein said gold-containing solid material contains gold in an amount of 400 ppm or higher.

[4.9] Method of extracting gold as defined under any one of items [4.1]-[4.8], wherein said gold-containing solid material is in particulate form.

[4.10] Method of extracting gold as defined under any one of items [4.1]-[4.9], wherein said gold-containing solid material is in particulate form and is the fraction that passes a sieve having a mesh width of 2.54 cm or less.

[4.11] Method of extracting gold as defined under any one of items [4.1]-[4.9], wherein said gold-containing solid material is in particulate form and is the fraction that passes a sieve having a mesh width of 1.27 cm or less.

[4.12] Method of extracting gold as defined under any one of items [4.1]-[4.9], wherein said gold-containing solid material is in particulate form and is the fraction that passes a sieve having a mesh width of 0.635 cm or less.

[4.13] Method of extracting gold as defined under any one of items [4.1]-[4.12], wherein said method is carried out as heap leaching.

[4.14] Method of extracting gold as defined under any one of items [4.1]-[4.13], wherein said step (a) of contacting a gold-containing solid material in the presence of an oxidizing agent with a lixiviant medium as defined under any one of items [3.1]-[3.19] such that a mother liquor enriched in a gold cyanide compound and a solid material having a reduced content of gold are obtained comprises

(a-1) forming a layer of said gold-containing solid material in particulate form on a surface impermeable to liquid water, and

(a-2) allowing said lixiviant medium to percolate said layer of said gold-containing solid material such that a mother liquor enriched in a gold cyanide compound and a solid material having a reduced content of gold are obtained,
and said step (b) of separating the mother liquor obtained in step (a) from the solid material having a reduced content of gold comprises
(b-1) collecting the mother liquor enriched in a gold cyanide compound from the surface impermeable to liquid water.

[4.15] Method of extracting gold as defined under item [4.14], wherein said step (a-2) of allowing said lixiviant medium to percolate said layer of gold-containing solid material is effected by the impact of gravity of earth.

[4.16] Method of extracting gold as defined under any one of items [4.14]-[4.15], wherein said surface impermeable to liquid water is the surface of a layer formed of a material comprising at least one of a polymer, a metal, concrete, asphalt, bitumen, clay.

[4.17] Method of extracting gold as defined under item [4.16], wherein the polymer is selected from polyethylene, polypropylene, polyvinylchloride, chlorosulfonated polyethylene, ethylene-propylene copolymer, ethylene-propylene-diene terpolymer, and any combination of these.

[4.18] Method of extracting gold as defined under item [4.16], wherein the metal is a ferrous metal.

[4.19] Method of extracting gold as defined under item [4.16], wherein the metal is steel.

[4.20] Method of extracting gold as defined under any one of items [4.14]-[4.19], wherein said steps (a-2) and (b-1) are carried out continuously.

[4.21] Method of extracting gold as defined under any one of items [4.14]-[4.20], wherein said steps (a-2) and (b-1) are carried out simultaneously.

[4.22] Method of extracting gold as defined under any one of items [4.14]-[4.20], wherein said step (a-2) is followed by a step (a-3) of allowing a second lixiviant medium to percolate said layer of said gold-containing solid material such that a mother liquor enriched in a gold cyanide compound and a solid material having a reduced content of gold are obtained, wherein said second lixiviant medium comprises

(i) an alkali metal cyanide,
(ii) a pH regulator suitable setting the pH of the composition to a value of 9 or higher,
(iii) water, and
wherein said second lixiviant medium does not contain a polyether-modified siloxane as defined under any one of items [1.2]-[1.68] and a non-ionic surfactant as defined under any one of items [1.69]-[1.93].

[4.23] Method of extracting gold as defined under item [4.22], wherein the alkali metal cyanide in said second lixiviant medium is sodium cyanide, potassium cyanide or a mixture of these.

[4.24] Method of extracting gold as defined under item [4.22] or [4.23], wherein the pH regulator in said second lixiviant medium is a calcium oxide, calcium hydroxide or a mixture of these.

[4.25] Method of extracting gold as defined under any one of items [4.22]-[4.24], wherein said second lixiviant medium has a pH of 9 or higher.

[4.26] Method of extracting gold as defined under any one of items [4.22]-[4.24], wherein said second lixiviant medium has a pH of 10 or higher.

[4.27] Method of extracting gold as defined under any one of items [4.22]-[4.24], wherein said second lixiviant medium has a pH of 10.5 or higher.

[4.28] Method of extracting gold as defined under any one of items [4.22]-[4.27], wherein the content of said alkali metal cyanide in said second lixiviant medium is in the range of 50 ppm or higher relative to the total weight of the second lixiviant medium.

[4.29] Method of extracting gold as defined under any one of items [4.22]-[4.27], wherein the content of said alkali metal cyanide in said second lixiviant medium is in the range of 70-1000 ppm or higher relative to the total weight of the second lixiviant medium.

[4.30] Method of extracting gold as defined under any one of items [4.22]-[4.27], wherein the content of said alkali metal cyanide in said second lixiviant medium is in the range of 90-500 ppm or higher relative to the total weight of the second lixiviant medium.

[4.31] Method of extracting gold as defined under any one of items [4.22]-[4.27], wherein the content of said alkali metal cyanide in said second lixiviant medium is in the range of 100-250 ppm or higher relative to the total weight of the second lixiviant medium.

[4.32] Method of extracting gold as defined under any one of items [4.22]-[4.31], wherein the said steps (a-2) and (a-3) are carried out over a period t of 25-90 days.

[4.33] Method of extracting gold as defined under any one of items [4.22]-[4.31], wherein said steps (a-2) and (a-3) are carried out over a period t of 30-80 days.

[4.34] Method of extracting gold as defined under any one of items [4.22]-[4.31], wherein said step (a) is carried out over a period t of 35-75 days.

[4.35] Method of extracting gold as defined under any one of items [4.22]-[4.31], wherein the said steps (a-2) and (a-3) are carried out over a period t of 40-70 days.

[4.36] Method of extracting gold as defined under any one of items [4.22]-[4.35], wherein the said step (a-2) is carried out for a period of time of 5-50 % of t, wherein t is the total period of time over which steps (a-2) and (a-3) are carried out.

[4.37] Method of extracting gold as defined under any one of items [4.22]-[4.35], wherein the said step (a-2) is carried out for a period of time of 10-40 % of t, wherein t is the total period of time over which steps (a-2) and (a-3) are carried out.

[4.38] Method of extracting gold as defined under any one of items [4.22]-[4.35], wherein the said step (a-2) is carried out for a period of time of 15-35 % of t, wherein t is the total period of time over which steps (a-2) and (a-3) are carried out.

[4.39] Method of extracting gold as defined under any one of items [4.22]-[4.35], wherein the said step (a-2) is carried out for a period of time of 20-30 % of t, wherein t is the total period of time over which steps (a-2) and (a-3) are carried out.

[4.40] Method of extracting gold as defined under any one of items [4.1]-[4.39], wherein said oxidizing agent is oxygen.

[4.41] Method of extracting gold as defined under any one of items [4.1]-[4.39], wherein said oxidizing agent is air.

[5.1] Use of a lixiviant medium as defined under any one of items [3.1]-[3.19] for extracting gold from a gold-containing solid material.

First aspect: Composition comprising a non-ionic surfactant and a polyether-modified siloxane

According the first aspect of the invention, a composition is provided which comprises a non-ionic surfactant and a polyether-modified siloxane.

In particular, said polyether-modified siloxane consists of structural units selected from the group consisting of type (I), (II), (III), and (IV),

$$[\text{mod-Si}(R^1)_2\text{-}]_{t1} \qquad (I)$$

,

$$[(R^1)_3\text{Si-}]_{t2} \qquad (II)$$

,

$$[\text{-O-Si(mod)}(R^1)\text{-}]_m \qquad (III)$$

,

$$[\text{-O-Si}(R^1)_2\text{-}]_n, \qquad (IV)$$

, wherein

mod    represents $-L\text{-O-}[\text{-A}_x{\sim}B_y{\sim}C_z\text{-}]^{\#}\text{-}R^2$, wherein
A    represents a structural unit having the formula $-CH(R^3)-CH(R^4)-O-$,
B    represents a structural unit having the formula $-CH_2-CH_2-O-$,
C    represents a structural unit having the formula $-CH(R^5)-CH(R^6)-O-$,
x    represents the number of the structural units of A and takes a value in the range of 0-50,
y    represents the number of the structural units of B and takes a value in the range of 0-50,
z    represents the number of the structural units of C and takes a value in the range of 0-50,

wherein x + y + z > 1,

$[\text{-A}_x{\sim}B_y{\sim}C_z\text{-}]^{\#}$        is independently selected in each occurrence from the group consisting of

• a copolymer consisting of x structural units A, y structural units B and z structural units C arranged in a statistical sequence,
• a copolymer consisting of structural units $A_x$, $B_y$ and $C_z$ arranged in a block structure represented by $(@LO)\text{-}(A_x)\text{-}(B_y)\text{-}(C_z)\text{-}(@R^2)$,
• a copolymer consisting of structural units $A_x$, $B_y$ and $C_z$ arranged in a block structure represented by $(@LO)\text{-}(C_z)\text{-}(B_y)\text{-}(A_x)\text{-}(@R^2)$,
• a copolymer consisting of structural units $A_x$, $B_y$ and $C_z$ arranged in a block structure represented by $(@LO)\text{-}(A_x)\text{-}(C_z)\text{-}(B_y)\text{-}(@R^2)$,
• a copolymer consisting of structural units $A_x$, $B_y$ and $C_z$ arranged in a block structure represented by $(@LO)\text{-}(B_y)\text{-}(C_z)\text{-}(A_x)\text{-}(@R^2)$,
• a copolymer consisting of structural units $A_x$, $B_y$ and $C_z$ arranged in a block structure represented by $(@LO)\text{-}(C_z)\text{-}(A_x)\text{-}(B_y)\text{-}(@R^2)$, and
• a copolymer consisting of structural units $A_x$, $B_y$ and $C_z$ arranged in a block structure represented by $(@LO)\text{-}(B_y)\text{-}(A_x)\text{-}(C_z)\text{-}(@R^2)$, wherein (@LO) indicates the terminus of the copolymer that is bonded to the structural unit represented by -L-O- and ($@R^2$) indicates the terminus of the copolymer that is bonded to the structural unit represented by $-R^2$,

L        is a single bond or a linear or branched alkylene group having 1-10 carbon atoms,
$R^2$        represents H, a linear or branched alkyl group having 1-6 carbon atoms or a group $-C(=O)-R^7$, wherein $R^7$ represents a linear or branched alkyl group having 1-6 carbon atoms,

16

| one of $R^3$ and $R^4$ | represents H and the other one represents a methyl group, |
| one of $R^5$ and $R^6$ | represents H and the other one represents a linear or branched alkyl group having 2 or 3 carbon atoms, and |
| $R^1$ | independently represents a linear or branched alkyl chain having 1-6 carbon atoms, |
| m | represents the number of the structural units of formula (III) present in the polyether-modified siloxane and takes a value in the range of 0-100, |
| n | represents the number of the structural units of formula (IV) present in the polyether-modified siloxane and takes a value in the range of 0-500, |
| t1 | represents the number of the structural units of formula (I) present in the polyether-modified siloxane and takes a value in the range of 0-2, |
| t2 | represents the number of the structural units of formula (II) present in the polyether-modified siloxane and takes a value in the range of 0-2, |

wherein

$t1 + t2 = 2$,
$t1 + m \geq 1$, and
$m + n \geq 1$.

That is, said polyether-modified siloxane can be a linear siloxane bearing a polyether substructure at a terminal silicon atom and/or a central silicon atom.

The silicone atoms in the siloxane chain molecule are substituted with groups $R^1$, which generally are a linear or branched alkyl chain having 1-6 carbon atoms and are selected independently, i.e. the groups $R^1$ can be identical or different. Preferably, $R^1$ is a linear or branched alkyl chain having 1-4 carbon atoms. More preferably, $R^1$ is independently selected from the group consisting of methyl, ethyl, n-propyl, and iso-propyl, more preferably $R^1$ is methyl.

The number of the central structural units of the siloxane chain which bear a polyether substructure, i.e. [-O-Si(mod)($R^1$)-] as shown in formula (III), is represented by parameter m which generally is in the range of 0-100. Preferably, m is 1 or more, such as in the range of from 1-100, more preferably 2-50, most preferably 3-30.

The number of the central structural units of the siloxane chain which do not bear a polyether substructure, i.e. [-O-Si($R^1$)$_2$-] as shown in formula (IV), is represented by parameter n which generally is in the range of 0-500. Preferably, n is in the range of 1-400, more preferably 5-200, even more preferably 10-100, still more preferably 15-60, most preferably 20-40. Since $m + n \geq 1$, the siloxane chain contains at least one central structural unit represented by formula (III) or (IV). In preferred embodiments, n and m fulfil the relation $15 \leq n + m \leq 150$. More preferably, n and m fulfil the relation $15 \leq n + m \leq 100$, most preferably $20 \leq n + m \leq 80$. The ratio of the number of central structural units of the siloxane chain which do not bear a polyether substructure and the number of central structural units of the siloxane chain which bear a polyether substructure can preferably fulfil the relation $5 \leq n/m \leq 20$, more preferably $10 \leq n/m \leq 15$.

The number of the terminal structural units of the siloxane chain which bear a polyether substructure, i.e. [mod-Si($R^1$)$_2$-] as shown in formula (I), is represented by parameter t1 which generally is in the range of 0-2. Preferably, t1 is 0. In alternative embodiments, t1 is 1 or 2, i.e. each of the terminal silicon atoms of the siloxane chain can bear a polyether substructure or only one terminal silicon atom.

The number of the terminal structural units of the siloxane chain which does not bear a polyether substructure, [($R^1$)$_3$Si-] as shown in formula (II), is represented by parameter t2 which generally is in the range of 0-2. Preferably, t2 is 0. In alternative embodiments, t2 is 1 or 2, i.e. each of the terminal silicon atoms of the siloxane chain can bear a polyether substructure or only one terminal silicon atom. Since $t1 + t2 = 2$, it is understood that two terminal structural units have to be present in the polyether-modified siloxane. Since only divalent repeating units can be present in the polyether-modified siloxane as represented by formulae (III) and (IV), it is furthermore understood the siloxane backbone of the polyether-modified siloxane is a linear chain of (Si-O) repeating units. Independently, it is noted that the polyether-modified siloxane contains at least one polyether substructure in its molecule which becomes apparent from the condition $t1 + m \geq 1$.

The polyether substructure modifying the siloxane chain is represented by parameter "mod" in formulae (I) and (III) and generally represents -L-O-[-$A_x$~$B_y$~$C_z$-]$^{\#}$-$R^2$. The terminal group $R^2$ generally can be H, i.e. polyether substructure has a hydroxyl group at its terminus, or it can be a linear or branched alkyl group having 1-6 carbon atoms, i.e. the polyether substructure is "capped" by an ether group, or a group -C(=O)-$R^7$, wherein $R^7$ represents a linear or branched alkyl group having 1-6 carbon atoms, i.e. the polyether substructure is "capped" by an ester group. When the polyether substructure is "capped" by an ether group, $R^2$ preferably is a linear or branched alkyl group having 1-4 carbon atoms and, more preferably, is selected from the group consisting of n-butyl, sec-butyl, iso-butyl, and tert-butyl. When the polyether substructure is "capped" by an ester group, $R^2$ preferably represents a group -C(=O)-$R^7$, wherein $R^7$ represents a linear or branched alkyl group having 1-4 carbon atoms and, more preferably, $R^7$ is selected from the group consisting of methyl, ethyl, n-propyl, and iso-propyl. Most preferably, $R^7$ represents methyl. $R^2$ and $R^7$ each are independently selected. In other words, in each occurrence $R^2$ can be the same or different and, likewise, $R^7$ can be the same or different. The moiety L which links the polyether substructure to the siloxane substructure can be a single bond or a linear or branched alkylene group having 1-10 carbon atoms. In preferred embodiments, L is a single bond or a linear or branched alkylene group having 2-6 carbon atoms, more preferably 3 or 4 carbon atoms such as a linear alkylene group having 3 carbon atoms, i.e. a propylene group.

The polyether substructure can contain repeating units represented by A, B, and C, which can be present in the polyether as a statistical copolymer, i.e. the sequence of the repeating units A, B, and C is essentially arbitrary, or they can be present in the polyether as oligomeric blocks $A_x$, $B_y$, $C_z$, wherein x represents the number of the structural units A, y represents the number of structural units B, and z represents the number of structural units C. Each of x, y, and z can independently represent 0-50, i.e. x, y, and z can be the same or different from each other. However, since it is stipulated that $x + y + z > 1$, it is understood that x, y, and z cannot be 0 at the same time. Nevertheless, there are preferred embodiments in which x is 0 or y is 0 or z is 0, or two of x, y, and z are 0. For instance, in more preferred embodiments, z is 0. While x can generally be a value in the range of 0-50, x preferably is 1-40, more preferably 10-35, most preferably 20-30. As mentioned, y can generally be a value in the range of 0-50 and preferably is 1-40, more preferably 10-35, most preferably 20-30. Likewise, z can generally be a value in the range of 0-50 and preferably is 1-40, more preferably 10-35, most preferably 20-30. In other more preferred embodiments, x, y, and z fulfil the relation $5 \leq x + y + z \leq 40$, even more preferably $10 \leq x + y + z \leq 35$, still more $20 \leq x + y + z \leq 30$. When z is 0, x and y preferably fulfil the relation $5 \leq x + y \leq 40$, more preferably $10 \leq x + y \leq 35$, still more preferably $20 \leq x + y \leq 30$. In these preferred embodiments or in alternative preferred embodiments, z can be 0 and x and y fulfil the relation $5 \leq y/x \leq 20$, preferably $10 \leq y/x \leq 15$.

A represents s structural unit having the formula $-CH(R^3)-CH(R^4)-O-$, wherein one of $R^3$ and $R^4$ represents H and the other one represents a methyl group. Thus, A represents a propyleneoxy unit. B represents s structural unit having the formula $-CH_2-CH_2-O-$ and hence represents an ethyleneoxy unit. C represents s structural unit having the formula $-CH(R^5)-CH(R^6)-O-$, wherein one of $R^5$ and $R^6$ represents H and the other one represents a linear or branched alkyl group having 2 or 3 carbon atoms, i.e. C represents a butyleneoxy or pentyleneoxy unit. In preferred exemplary embodiments, one of $R^5$ and $R^6$ represents H and the other one represents ethyl, n-propyl, or iso-propyl.

In particularly preferred embodiments, the polyether-modified siloxane has a structure represented by formulae (I)-(IV) as defined in hereinabove, wherein

x represents a value in the range of 20-30,
y represents a value in the range of 0-5,
z represents 0,
L represents a linear alkylene group having 3 carbon atoms,
$R^1$ represents methyl,
$R^2$ is selected from H, and a linear or branched alkyl group having 1-4 carbon atoms,
m represents 1-5,
n represents 20-30,
t1 represents 2,
t2 represents 0.

Among these particularly preferred embodiments, those are more preferred in which (1) y represents a value in the range of 1-5, $R^2$ is represents H, and $[-A_x \sim B_y \sim C_z-]^\#$ represents a copolymer in which $A_x$, $B_y$ and $C_z$ are arranged in a block structure represented by $(@LO)-(B_y)-(C_z)-(A_x)-(@R^2)$ or in a statistical sequence, or (2) y represents 0 and $R^2$ is represents a linear or branched alkyl group having 4 carbon atoms. As mentioned hereinabove, (@LO) indicates the terminus of the copolymer that is bonded to the structural unit represented by $-L-O-$ and $(@R^2)$ indicates the terminus of the copolymer that is bonded to the structural unit represented by $-R^2$.

Polyether-modified siloxane of these types can be prepared, for instance, from a linear siloxane, in which "mod" is replaced with hydrogen, and a corresponding polyether building block in which L represents an moiety having a terminal olefinic carbon-carbon double bond by means of a hydrosilylation reaction. Suitable siloxane building block and polyether-modified siloxane as described hereinabove are also commercially available from CHT Germany GmbH (Tübingen, Germany).

The non-ionic surfactant can have a has a chemical constitution according to general formula (V)

$$R^8-O-[-D_p \sim E_q \sim F_r-]^\#-H \qquad (V),$$

wherein

| $R^8$ | represents a linear or branched alkyl group having 4-22 carbon atoms, |
| $D$ | represents a structural unit having the formula $-CH(R^9)-CH(R^{10})-O-$, |

| | |
|---|---|
| E | represents a structural unit having the formula $-CH_2-CH_2-O-$, |
| F | represents a structural unit having the formula $-CH(R^{11})-CH(R^{12})-O-$, |
| p | represents the number of structural units D and takes a value in the range of 0-10, |
| q | represents the number of structural units E and takes a value in the range of 3-50, |
| r | represents the number of structural units F and takes a value in the range of 0-40, |
| one of $R^9$ and $R^{10}$ | represents H and the other one represents a linear or branched alkyl group having 1-4 carbon atoms, |
| one of $R^{11}$ and $R^{12}$ | represents H and the other one represents a linear or branched alkyl group having 1-4 carbon atoms, |
| $[-D_p\sim E_q\sim F_r-]^{\#}$ | is independently selected in each occurrence from the group consisting of |

•a copolymer consisting of p structural units D, q structural units E and r structural units F arranged in a statistical sequence,
•a copolymer consisting of structural units $D_p$, $E_q$ and $F_r$ arranged in a block structure represented by $(@R^8O)-(D_p)-(E_q)-(F_r)-(@H)$,
•a copolymer consisting of structural units $A_x$, $B_y$ and $C_z$ arranged in a block structure represented by $(@R^8O)-(F_r)-(E_q)-(D_p)-(@H)$,
•a copolymer consisting of structural units $A_x$, $B_y$ and $C_z$ arranged in a block structure represented by $(@R^8O)-(D_p)-(F_r)-(E_q)-(@H)$,
•a copolymer consisting of structural units $A_x$, $B_y$ and $C_z$ arranged in a block structure represented by $(@R^8O)-(E_q)-(F_r)-(D_p)-(@H)$,
•a copolymer consisting of structural units $A_x$, $B_y$ and $C_z$ arranged in a block structure represented by $(@R^8O)-(F_r)-(D_p)-(E_q)-(@H)$, and
•a copolymer consisting of structural units $A_x$, $B_y$ and $C_z$ arranged in a block structure represented by $(@R^8O)-(E_q)-(D_p)-(F_r)-(@H)$,

wherein $(@R^8O)$ indicates the terminus of the copolymer that is bonded to the structural unit represented in formula (V) by $R^8O-$ and $(@H)$ indicates the terminus of the copolymer that is bonded to the structural unit represented in formula (V) by $-H$.

That is, the non-ionic surfactant can essentially be an alkoxylated long-chain alcohol such as a fatty alcohol. Alternatively, the alcohol can be a so-called Guerbet alcohol, i.e. an alcohol obtained from a Guerbet reaction. Such non-ionic surfactant are described in WO 2006/069738 A1, for instance.

While $R^8$ can generally be a linear or branched alkyl group having 4-22 carbon atoms, $R^8$ preferably is a linear or branched alkyl group having 8-18 carbon atoms, more preferably 10-16 carbon atoms, even more preferably 11-13 carbon atoms. In some preferred embodiments, $R^8$ is a branched alkyl group.

The non-ionic surfactant comprises a polyether substructure represented by $[-D_p\sim E_q\sim F_r-]^{\#}$, wherein D represents a structural unit having the formula $-CH(R^9)-CH(R^{10})-O-$ in which one of $R^9$ and $R^{10}$ represents H and the other one represents a linear or branched alkyl group having 1-4 carbon atoms. E represents a structural unit having the formula $-CH_2-CH_2-O-$, i.e. an ethyleneoxy group. F represents a structural unit having the formula $-CH(R^{11})-CH(R^{12})-O-$ in which one of $R^{11}$ and $R^{12}$ represents H and the other one represents a linear or branched alkyl group having 1-4 carbon atoms. Thus, D and F can each represent a propyleneoxy unit, a butyleneoxy unit, a pentyleneoxy unit or a hexyleneoxy unit. D, E, and F can be present as a statistical copolymer, i.e. the sequence of the repeating units A, B, and C is essentially arbitrary, or they can be present as oligomeric blocks $D_p$, $E_q$, and $F_r$, wherein p represents the number of the structural units D, q represents the number of structural units E, and r represents the number of structural units F. As regards D, it is preferred that one of $R^9$ and $R^{10}$ represents H and the other one represents a linear or branched alkyl group having 1-3 carbon atoms and is, for instance, selected from the group consisting of methyl, ethyl, n-propyl, and iso-propyl. More preferably, one of $R^9$ and $R^{10}$ represents H and the other one represents methyl. Independently, as regards F, it is preferred that one of $R^{11}$ and $R^{12}$ represents H and the other one represents a linear or branched alkyl group having 1-3 carbon atoms and is, for instance, selected from the group consisting of methyl, ethyl, n-propyl, and iso-propyl. More preferably, one of $R^{11}$ and $R^{12}$ represents H and the other one represents methyl.

Generally, p represents a value in the range of 0-10, q represents a value in the range of 3-50, and r represents a value in the range of 0-40. In preferred embodiments, p is 0-5 and p can more preferably be 0. In some preferred embodiments, q can be 4-20, more preferably 5-15. Furthermore, in some preferred embodiments, r can be 1-25, more preferably 2-15. In other preferred embodiments, r can be 0. In more preferred embodiments, p is 0 and q and r fulfil the relation $2 \leq q + r \leq 25$ or $5 \leq q + r \leq 15$.

In particularly preferred embodiments, the non-ionic surfactant has a structure represented by formula (V), wherein $R^8$ represents is a linear or branched alkyl group having 11-13 carbon atoms, one of $R^9$ and $R^{10}$ represents H and the other one represents methyl, p represents a value in the range of 0-10, q represents a value in the range of 5-15, and r is 0. More preferably, $R^8$ represents a branched alkyl group. Alternatively, (1) p is 0 and q represents a value in the range of 5-10 or (2) p represents a value in the range of 1-5 and q represents a value in the range of 5-10. In some more preferred embodiments, $R^8$ represents a branched alkyl group, q represents a value in the range of 5-10 and p is 0 or, alternatively, p represents a value in the range of 1-5.

In some embodiments, the non-ionic surfactant is a combination of a compound of formula (Va) and a compound of formula (Vb),

$$R^8\text{-}O\text{-}[\text{-}D_p{\sim}E_q\text{-}]^\#\text{-}H \qquad (Va),$$

$$R^8\text{-}O\text{-}E_q\text{-}H \qquad (Vb)$$

wherein

$R^8$ represents is a branched alkyl group having 11-13 carbon atoms,
one of $R^9$ and $R^{10}$ represents H and the other one represents methyl,
p represents a value in the range of 0-10,
q represents a value in the range of 5-15.

These compounds of formula (Va) and formula (Vb) can preferably be present in a weight ratio of (Vb) : (Va) in the range of 2-5, more preferably 3-4.

While the amounts of the polyether-modified siloxane and the non-ionic surfactant can be selected by the skilled person according to his common knowledge in order to adjusted the suitability of the composition to prepare a lixiviant medium capable of efficiently extracting gold from a gold-containing solid material, such as a gold ore, in preferred embodiments, the composition according to the first aspect of the invention contains 50-98 wt.-% of said non-ionic surfactant and 2-50 wt.-% of said polyether-modified siloxane, relative to the total weight of said non-ionic surfactant and said polyether-modified siloxane. In more preferred embodiments, the composition contains 60-90 wt.-% of said non-ionic surfactant and 10-40 wt.-% of said polyether-modified siloxane, relative to the total weight of said non-ionic surfactant and said polyether-modified siloxane. In even more preferred embodiments, the composition contains 70-85 wt.-% of said non-ionic surfactant and 15-30 wt.-% of said polyether-modified siloxane, relative to the total weight of said non-ionic surfactant and said polyether-modified siloxane. In still more preferred embodiments, the composition contains 75-85 wt.-% of said non-ionic surfactant and 15-25 wt.-% of said polyether-modified siloxane, relative to the total weight of said non-ionic surfactant and said polyether-modified siloxane.

When the composition contains compounds of formula (Va) and formula (Vb) as the non-ionic surfactant, the composition can preferably contain 5-88 wt.-% of a non-ionic surfactant of formula (Va), 10-90 wt.-% of a non-ionic surfactant of formula (Vb), and 2-50 wt.-% of said polyether-modified siloxane, relative to the total weight of said non-ionic surfactant and said polyether-modified siloxane. More preferably, the composition contains 10-40 wt.-% of a non-ionic surfactant of formula (Va), 20-80 wt.-% of a non-ionic surfactant of formula (Vb), and 10-40 wt.-% of said polyether-modified siloxane, relative to the total weight of said non-ionic surfactant and said polyether-modified siloxane. Even more preferably, the composition contains 15-30 wt.-% of a non-ionic surfactant of formula (Va), 40-70 wt.-% of a non-ionic surfactant of formula (Vb), and 15-30 wt.-% of said polyether-modified siloxane, relative to the total weight of said non-ionic surfactant and said polyether-modified siloxane. Still more preferably, the composition contains 15-30 wt.-% of a non-ionic surfactant of formula (Va), 45-70 wt.-% of a non-ionic surfactant of formula (Vb), and 15-25 wt.-% of said polyether-modified siloxane, relative to the total weight of said non-ionic surfactant and said polyether-modified siloxane.

Independently, the composition contains water, preferably in an amount of 25 wt.-% or less of water, relative to the total weight of said non-ionic surfactant and said polyether-modified siloxane; more preferably in an amount of 5-20 wt.-%, even more preferably 7-15 wt.-%.

**Second aspect: Method of preparing a lixiviant medium from said composition according to the first aspect of the invention**

According to the second aspect of the invention, a method of preparing a lixiviant medium from said composition according to the first aspect of the invention is provided.

Said method generally comprises mixing

(i) a composition according to the first aspect of the invention as described hereinabove,

(ii) an alkali metal cyanide,
(iii) a pH regulator suitable setting the pH of the composition to a value of 9 or higher, and
(iv) water.

The alkali metal cyanide is not particularly limited, but sodium cyanide, potassium cyanide or a mixture of these are preferred from the viewpoint of solubility, availability and costs. Any agent suitable for adjusting the pH of an aqueous composition to a level of pH 9 or higher can be used as the pH regulator. However, from viewpoint of involved costs and availability, calcium oxide, calcium hydroxide and mixtures of these are preferred.

As regards the sequence of mixing, it is preferred to admix said composition (i) to an aqueous solution of said alkali metal cyanide (ii) and said pH regulator (iii). In more preferred embodiments, the composition (i) is mixed with water prior to being admixed to an aqueous solution of said alkali metal cyanide (ii) and said pH regulator (iii).

Further embodiments that are characterized by specific components of said lixiviant medium and/or their amounts in which they are present become apparent from the following description of the lixiviant medium according to the third aspect of the invention.

### Third aspect: Lixiviant medium

According to the third aspect of the invention, a lixiviant medium is provided.

In particular, said lixiviant medium comprises

(i) a composition according to the first aspect of the invention as described hereinabove,
(ii) an alkali metal cyanide,
(iii) a pH regulator suitable setting the pH of the composition to a value of 9 or higher, and
(iv) water.

The alkali metal cyanide is not particularly limited, but sodium cyanide, potassium cyanide or a mixture of these are preferred from the viewpoint of solubility, availability and costs. Any agent suitable for adjusting the pH of an aqueous composition to a level of pH 9 or higher can be used as the pH regulator. However, from viewpoint of involved costs and availability, calcium oxide, calcium hydroxide and mixtures of these are preferred.

In preferred embodiments, the lixiviant medium has a pH of 9 or higher, more preferably a pH of 10 or higher, most preferably a pH of 10.5 or higher. A higher pH is preferred as it renders gold extraction more efficient.

In view of the high toxicity of alkyl metal cyanides and cyanide anions in general, there is the aim to reduce the amount of alkali metal cyanide contained in the lixiviant medium. However, in order to render gold extraction more efficient, it is preferred that the content of said alkali metal cyanide is in the range of 50 ppm or higher relative to the total weight of the lixiviant medium. A compromise between the desired reduction of the amount of alkali metal cyanide contained in the lixiviant medium and efficiency of gold extraction is usually accomplished when the content of said alkali metal cyanide is in the range of 70-1000 ppm relative to the total weight of the lixiviant medium, which therefore preferred. More preferably, the content of said alkali metal cyanide is in the range of 90-500 ppm, even more preferably 90-500 ppm, still more preferably in the range of 100-250 ppm, relative to the total weight of the lixiviant medium.

Similarly, the content of said composition (i) preferably is in the range of 10-100 ppm relative to the total weight of the lixiviant medium, more preferably 20-80 ppm, even more preferably 25-60 ppm, still more preferably 25-50 ppm.

The total content of said composition (i) and said alkali metal cyanide is preferably 5000 ppm or less relative to the total weight of the lixiviant medium. More preferably, the total content of said composition (i) and said alkali metal cyanide is 3000 ppm or less, even more preferably 2000 ppm, still more preferably 1000 ppm, most preferably 500 ppm. It is hence understood that, compared to all other components present in the lixiviant medium, water preferably represents the component that is present in the highest amount relative to the total weight of the lixiviant medium, for instance water represents the component present in an amount of 90 % or higher relative to the total weight of the lixiviant medium.

### Fourth aspect: Method of extracting gold from a gold-containing solid material

According to the fourth aspect of the invention, a method of extracting gold from a gold-containing solid material is provided.

In particular, the method of extracting gold from a gold-containing solid material comprises the steps of

(a) contacting a gold-containing solid material in the presence of an oxidizing agent with a lixiviant medium according to the third aspect of the invention as described hereinabove such that a mother liquor enriched in a gold cyanide compound and a solid material having a reduced content of gold are obtained, and
(b) separating the mother liquor obtained in step (a) from the solid material having a reduced content of gold.

Said gold-containing solid material typically is a mineral material such as an ore, for instance, but is not limited to this. Said gold-containing solid material can contain gold in any form, i.e. it is not limited in this regard, but, preferably, the gold is present in a form selected from the group consisting of elemental gold in particulate form, a gold alloy, a gold mineral, and a combination of these. Said alloy preferably comprises gold and at least one metal selected from the group consisting of silver, copper, nickel, cobalt, ruthenium, rhodium, palladium, osmium, iridium, and platinum. Said gold mineral is preferably selected from the group consisting of calaverite, krennerite, sylvanite, petzite, nagyagite, bezsmertnovit, maldonite, bogdanovit, anyulite, auricupride, aurostilbite, hunchunite, novodneprite, tetra-auricupride, uytenbogaardite, weishanite, and yuanjiangite.

In preferred embodiments, said gold-containing solid material contains gold in an amount of 100 ppm or higher. It goes without saying that a higher content of gold is preferable as the extraction of gold thus becomes economically more attractive. Thus, it is more preferred that the gold-containing solid material contains gold in an amount of 250 ppm or higher and it is even more preferred that the gold-containing solid material contains gold in an amount of 400 ppm or higher.

In order to render the extraction of gold more efficient, it is usually advantageous to provide the gold-containing solid material in the form of relatively fine particles. For this purpose, the gold-containing solid material can be milled or ground and subjected to sieving in order to separate large particles from particles having an acceptable size. Thus, the gold-containing solid material that is used as the starting material in step (a) of the method can be a fraction that passes a sieve having a mesh width of 2.54 cm or less. More preferably, the gold-containing solid material is the fraction that passes a sieve having a mesh width of 1.27 cm or less, even more preferably 0.635 cm or less.

The method of extracting gold of this aspect of the invention can be carried out in a manner that is commonly known as heap leaching.

In preferred embodiments, the method of extracting gold of this aspect of the invention is carried out in manner wherein said step (a) (i.e. the step of contacting a gold-containing solid material in the presence of an oxidizing agent with a lixiviant medium according to the third aspect of the invention as described hereinabove such that a mother liquor enriched in a gold cyanide compound and a solid material having a reduced content of gold are obtained) comprises

    (a-1) forming a layer of said gold-containing solid material in particulate form on a surface impermeable to liquid water, and

    (a-2) allowing said lixiviant medium to percolate said layer of said gold-containing solid material such that a mother liquor enriched in a gold cyanide compound and a solid material having a reduced content of gold are obtained, and said step (b) (i.e. the step of separating the mother liquor obtained in step (a) from the solid material having a reduced content of gold) comprises

    (b-1) collecting the mother liquor enriched in a gold cyanide compound from the surface impermeable to liquid water.

As these embodiments of the method are usually carried out in a very large scale, i.e. the amount of gold-containing solid material used as the starting material can be as high as 100 000 to 500 000 t (metric tons), said step (a-2) of allowing said lixiviant medium to percolate said layer of gold-containing solid material is effected by the impact of gravity of earth.

Said surface impermeable to liquid water can preferably be the surface of a layer formed of a material comprising at least one of a polymer, a metal, concrete, asphalt, bitumen, clay. That is, a combination of these materials, for instance in the form of two or more layers, can also be used. For instance, said polymer is selected from polyethylene, polypropylene, polyvinylchloride, chlorosulfonated polyethylene, ethylene-propylene copolymer, ethylene-propylene-diene terpolymer, and any combination of these. Said metal can be a ferrous metal such as steel.

The method and in particular steps (a-2) and (b-1) can be carried out simultaneously. That is, after irrigation of the gold-containing solid material with the lixiviant medium has been started and percolation has been effected for a time sufficient such that the mother liquor enriched enriched in a gold cyanide compound has started to collect on the surface impermeable to water, further irrigation with lixiviant medium (and hence said step (a-2)) and collecting said mother liquor can be carried out at the same time, i.e. simultaneously. It is likewise possible to carry out said steps of (a-2) and (b-1) batch-wise (on a pre-defined amount of gold-containing sold material) or continuously by moving the apparatus used for irrigating over an area of gold-containing material, wherein the material depleted in gold is continuously removed and fresh gold-containing material is continuously supplied.

In particularly preferred embodiments, said step (a-2) is followed by a step (a-3) in which a second lixiviant medium is allowed to percolate said layer of said gold-containing solid material such that a mother liquor enriched in a gold cyanide compound and a solid material having a reduced content of gold are obtained, wherein said second lixiviant medium does not contain a polyether-modified siloxane and a non-ionic surfactant as described hereinabove with respect to the first aspect of the invention. That is, said second lixiviant medium comprises an alkali metal cyanide, a pH regulator suitable setting the pH of the composition to a value of 9 or higher and water in the same manner as described with respect to the lixiviant medium according to the third aspect of the invention and differs in that said polyether-modified siloxane and said non-ionic surfactant are absent.

It was surprisingly found that using a lixiviant medium according to the third aspect of the invention only during a first stage of extracting gold, whereas said second lixiviant medium is used during a second stage does not negatively affect gold extraction. In other words, it is possible to avoid the use of said polyether-modified siloxane and said non-ionic surfactant during said second stage which is advantageous as regards costs and use of resources. For instance, in typical (but not restrictive) embodiments, said combination of steps of (a-2) and (a-3) is carried out over a period t of up to 90 days, such as preferably 25-90 days, more preferably 30-80 days, even more preferably 35-75 days, still more preferably 40-70 days. Said step (a-2) can preferably be carried out for a period of time of 5-50 % of said period t (i.e. the total period of time over which steps (a-2) and (a-3) are carried out). More preferably, said step (a-2) is carried out for a period of time of 10-40 % of t, even more preferably 15-35 % of t, still more preferably 20-30 % of t, wherein t is the total period of time over which steps (a-2) and (a-3) are carried out.

It is generally preferred that oxygen is used as the oxidizing agent in this method, in particular in a mixture of gases such as air taken from the atmosphere.

**Fifth aspect: Use of a composition according to the first aspect of the present invention for extracting gold from a gold-containing solid material**

According to the fifth aspect of the invention, a use of a composition according to the first aspect of the invention as described hereinabove for extracting gold from a gold-containing solid material is provided. Likewise, a use of a lixiviant medium according to the third aspect of the invention as described hereinabove from extracting gold from a gold-containing solid material is provided. More specific and preferred embodiments become apparent from the description of the first, third and fourth aspect of the invention.

## Examples

In the following, the present invention is illustrated by means of the following examples and comparative examples.

**General observations**

In the examples and comparative examples, the following materials and analytical methods are used.

**(1) Gold content**

Determination of gold content in cyanide solutions was carried out according to the method described in ASTM E 1600-15 by means of flame atomic absorption using a VARIAN-240 spectrometer.

Determination of gold content in mineral was carried out according to the method described in NTP ISO 11426:2017, following the fire test method through cupellation, treating it as a sulfurized and oxidized sample and detection by flame atomic absorption.

**(2) Cyanide content**

The content of cyanide in a pregnant solution that is not bound in a complex gold compound (i.e. the free cyanide) is determined according to the following method (that is based on the method described by Liebig).

A sample of the solution to be analysed is placed in a flask and the sample weight m(sample) is determined. 5 drops of a solution of potassium iodide (KI) having a concentration of about 0.2 g KI per 100 ml are added and the sample is titrated with a silver nitrate solution ($AgNO_3$) until the solution persistently turns opaque-white as a result of silver iodide formation. At this point, the volume of the silver nitrate solution $V(AgNO_3)$ added to the sample solution is recorded. The content of free cyanide (in ppm) is determined according to the following equation.

$$\text{Content of free cyanide (in ppm)} = (200 \cdot f \cdot V(AgNO_3) / m(\text{sample}))$$

wherein

$V(AgNO_3)$ is the volume of silver nitrate solution added when the solution persistently turns opaque-white (in ml),

m(sample) is the weight of the sample to be analysed (in gram),

f is the concentration of the silver nitrate solution (in mol/l).

**(3) Foaming tendency during agitation**

The foaming behaviour of a compound, i.e. the tendency to form a body of foam on an aqueous solution or dispersion of said compound, is tested using a device SMS 350/2 (developed by and proprietary of the present applicant). The device consists of a cylindrical sample vessel made from stainless steel and having the capacity of holding 200 ml of sample liquid. The sample vessel is provided with a fritted glass filter through which a stream of air can be introduced into the sample liquid in order to provoke foam formation under conditions that are similar to air being introduced as a result of agitation. The volume rate of the stream of air can be set in a range of 100-900 ml/min.

A cylindrical glass tube having an outer diameter of 80 mm and a height of 400 mm can be vertically attached to the sample vessel and provides the space in which the foam can rise such that the height of a foam body can be determined by visual inspection.

The sample vessel is located on a heater plate and can be set to a temperature of 20-80 °C in order to allow the investigation of foam formation at different temperatures. Prior to any measurement, the air flow is set to the volume rate (such as 500 ml/min) desired for the measurement.

The data shown in the present application have been obtained as described in the following.

The test liquid is prepared by dissolving the compound to be tested in tap water having a hardness of 3 °dH ("deutsche Härtegrade") such that a concentration of 2 g/l results. 200 ml of this test liquid is placed in the sample vessel, the cylindrical glass tube is attached to the sample vessel, and the temperature is set to 22 °C. The air flow (500 ml/min) is started and the height of the foam body in the glass tube is recorded after 2, 4, 6, 8, and 10 minutes.

If the height of the foam body exceeds 35 cm, the measurement has to be stopped in order to prevent spillage.

**(4) Surface tension**

Surface tension of liquids is determined according to the ring method, also referred to as the Du Noüy ring method, using a tensiometer K6 of Krüss GmbH (Germany).

Test liquids having a concentration of 30 ppm, 50 ppm, 1000 ppm, and 200 ppm, respectively, are prepared by dissolving the compound to be tested in tap water having a hardness of 3 °dH ("deutsche Härtegrade").. The measurement is carried out at a temperature of 16 °C.

**(5) Materials used**

In the examples and comparative examples, the following materials were used.

Gold ore A:

Gold ore having a gold content of 0.486 g/t, milled and sieved through a sieve having a mesh size of about 74 μm (200 mesh).

Gold ore B:

Gold ore having a gold content of 0.663 g/t (from Tantahuatay Gold Prospect, province of Cajamarca, Peru), milled and sieved through a sieve of having a mesh size of about 0.5 inch (= 12.7 mm).

Reagent A:

A reagent comprising a non-ionic surfactant and a polyether-modified siloxane is prepared by blending

58 parts by weight of Lutensol TO 7,
17 parts by weight of Imbentin SG/737/T,
16 parts by weight of Hansa SP 1080 D,
9 parts by weight of water (having a hardness of 3 °dH).

Thus, reagent A contains 75 parts by weight of non-ionic surfactants and 16 parts by weight of a polyether-modified siloxane.

Reagent B:

A reagent comprising a non-ionic surfactant and a polyether-modified siloxane is prepared by blending

54 parts by weight of Marlipal O13/60,
17 parts by weight of Imbentin SG/737/T,
20 parts by weight of Hansa SP 1080 D,
9 parts by weight of water (having a hardness of 3 °dH).

Lupromin L110 is a non-ionic surfactant commercially available from BASF SE (Germany). It is an ethoxylated/propoxylated iso-tridecanol according to WO 2006/069738 A1.

Lutensol TO 7 is a non-ionic surfactant commercially available from BASF SE (Germany). It is an ethoxylated iso-tridecanol having 7 ethyleneoxy groups.

Marlipal O13/60 is a non-ionic surfactant commercially available from Sasol Germany GmbH (Germany). It is an ethoxylated iso-tridecanol having 6 ethyleneoxy groups.

Imbentin SG/737/T is a non-ionic surfactant commercially available from Kolb Distribution Ltd. (Switzerland). It is an ethoxylated/propoxylated iso-undecanol having 9 ethyleneoxy groups and 6 propyleneoxy groups.

Hansa SP 1080 D (commercially available from CHT Germany, Germany) is a polydimethylsiloxane modified so as to have one moiety $-CH_2-CH_2-CH_2-O-(PO)_{25}-H$ attached to each terminal Si atom of the polydimethylsiloxane chain and, furthermore, to central Si atoms of the polydimethylsiloxane chain. This structure can be expressed in a schematic manner as follows.

$$mod\text{-}Si(Me)_2\text{-}[-O\text{-}Si(Me)_2\text{-}]_n\text{-}[-O\text{-}Si(mod)(Me)\text{-}]_m\text{-}O\text{-}Si(Me)_2\text{-}mod$$

wherein

$Me = -CH_3$,
$mod = -CH_2-CH_2-CH_2-O-(PO)_{25}-H$.

It is understood that the indication $-[-O\text{-}Si(Me)_2\text{-}]_n\text{-}[-O\text{-}Si(mod)(Me)\text{-}]_m-$ relates to a statistical structure of the polysiloxane backbone, i.e. when $m = 2$ and $n = 25$ the respective repeating units are not necessarily arranged in such a manner that a block copolymer structure results, although this structure is also not excluded.

## Reference example 1

The surface tension and the foaming tendency of an aqueous solution of a non-ionic surfactant according to prior art WO 2006/069738 A1 (Lupromin L110) is determined. Likewise, an aqueous solution of said non-ionic surfactant in combination with a polyether-modified siloxane (reagent A) and the is determined. The results are shown in table 1.

Table 1: Amount of ingredients and analytical results of comparative example 1

|  | Height of foam body after 2/4/6/8/10 minutes [cm] | Surface tension at concentration of 30/50/100/200 ppm [mN/m] |
|---|---|---|
| Lupromin L110 | 22/---[(×)] | 33/33/32/32 |
| Hansa SP 1080 D | 2/2/2/2/2 | 43/41/39/37 |
| Reagent A | 3/3/3/3/3 | 36/35/33/33 |
| Reagent B | --[($)] | 38/36/33/31/--[($)] |
| [(x)]: Measurement had to be stopped as height of foam body exceeded 35 cm | | |
| [($)]: Measurement omitted | | |

The test reveals that the non-ionic surfactant according to prior art WO 2006/069738 A1 results in a solution having a low surface tension, which could be useful in order to improve efficiency of cyanide leaching, but gives rise to heavy foaming which would interfere with processing of a pregnant solution. Reagent A combines low surface tension and low foaming tendency. Reagent B shows comparably low surface tension.

## Comparative example 1

1 kg of gold ore A having a gold content of 0.486 g/t is placed in a bottle and a 1.225 litres of water is added in order to form a suspension having a solids content of 45 %. To this content of the bottle, 1.5 g of sodium cyanide, equivalent to 0.795 g of cyanide (based on content of 0.53 g of cyanide per 1 g sodium cyanide), was added such that a solution containing 0.65 g/l (= 649 ppm) of cyanide is obtained. The pH value of the solution is adjusted to 10.6 by adding 5.2 g of calcium oxide. The bottle is closed and placed on a laboratory bottle roller and rolled at 70 rpm for a period of 72 hours.

A sample of 25 ml is collected from the bottle 2 hours after addition of the ingredients was completed and rolling of the bottle was begun. The content of cyanide not bound in a complex gold compound, the pH value and the gold content of the sample is determined. Further samples are taken and analysed 4 hours, 8 hours, 10 hours, 24 hours, 48 hours and 72 hours after addition of the ingredients was completed and rolling of the bottle was begun.

Additional sodium cyanide is added to the content of the bottle. Likewise, if it is found that the pH is 10.4 or lower, additional calcium oxide is added to the content of the bottle in an amount sufficient to increase the pH to a value of 10.6 to 10.8. This procedure and the results are summarized in table 2.

Table 2: Amount of ingredients and analytical results of comparative example 1

| Time | pH | | CaO | Cyanide | | Gold | |
|---|---|---|---|---|---|---|---|
| [h] | initial[#] | final[*] | added [g] | content[#] [ppm] | added [g] | content [ppm] | extracted [%] |
| 0 | -- | 10.6 | 5.2 | -- | 0.795 | -- | -- |
| 2 | 10.1 | 10.8 | 0.2 | 80 | 0.742 | 0.20 | 41 |
| 4 | 10.8 | 10.8 | 0 | 650 | 0.371 | 0.22 | 45 |
| 8 | 10.6 | 10.6 | 0 | 550 | 0.424 | 0.25 | 51 |
| 10 | 10.6 | 10.6 | 0 | 950 | 0.159 | 0.27 | 56 |
| 24 | 10.5 | 10.5 | 0 | 900 | 0.212 | 0.30 | 62 |
| 48 | 10.0 | 10.7 | 0.2 | 680 | 0.318 | 0.35 | 72 |
| 72 | 10.0 | 10.0 | 0 | 800 | 0 | 0.36 | 74 |
| Total amount added | | | | [g] | 3.021 | | |
| Amount remaining | | | | [g] | 0.800 | | |
| Amount consumed | | | | [g] | 2.221 | | |
| Amount consumed per ton of ore | | | [kg/t] | 2.221 | | | |
| [#]: as measured in sample taken from bottle | | | | | | | |
| [*]: pH after addition of calcium oxide, if any | | | | | | | |

The total amount of cyanide consumed by gold extraction is calculated taking into account the total amount of cyanide added and the amount of cyanide remaining in the lixiviant medium. The total amount of sodium cyanide consumed is 2.221 g / 0.53 = 4.191 g. The total amount of sodium cyanide consumed per ton of ore is 4.191 kg/ton of ore.

The consumption of cyanide in the course of this experiment is shown in more detail in table 3. Furthermore, the surface tension of the lixiviant medium is shown.

Table 3: Cyanide consumption in comparative example 1

| Time | Cyanide | | | | |
|---|---|---|---|---|---|
| [h] | content[#] [ppm] | added [g] | added (cumulative) [g] | consumed (cumulative) [g] | Surface tension [mN/m] |
| 0 | -- | 0.795 | 0.795 | | 72 |
| 2 | 150 | 0.689 | 1.537 | 0.715 | 72 |
| 4 | 450 | 0.477 | 1.908 | 0.887 | 73 |
| 8 | 600 | 0.371 | 2.332 | 1.358 | 72 |
| 10 | 900 | 0.159 | 2.491 | 1.382 | 71 |
| 24 | 780 | 0.265 | 2.703 | 1.591 | 69 |
| 48 | 550 | 0.424 | 3.021 | 2.023 | 61 |
| 72 | 850 | 0 | 3.021 | 2.221 | 72 |
| [#]: as measured in sample taken from bottle | | | | | |

The surface tension does not significantly deviate from the surface tension of pure water (72 mN/m).

**Example 1**

**Example 1a:** Comparative example 1 was repeated with the only exception that reagent B is added in order to form a lixiviant medium according to the present invention. Specifically, 6 portions of 37 mg, each equivalent to an amount of 30 ppm relative to the amount of ore, resulting in a total amount of 222 mg, equivalent to an amount of 181 ppm relative to the amount of ore were added.

This procedure and the results are summarized in table 4.

Table 4: Amount of ingredients and analytical results of example 1a

| Time | pH | | CaO | Cyanide | | Reagent | Gold | |
|---|---|---|---|---|---|---|---|---|
| [h] | initial[#] | final[*] | added [g] | content[#] [ppm] | added [g] | [mg] | content [ppm] | extracted [%] |
| 0 | -- | 10.6 | 5.2 | -- | 0.795 | 37 | -- | -- |
| 2 | 10.2 | 10.8 | 0.3 | 150 | 0.689 | 37 | 0.21 | 45 |
| 4 | 10.7 | 10.7 | 0 | 450 | 0.477 | 37 | 0.28 | 58 |
| 8 | 10.6 | 10.6 | 0 | 600 | 0.371 | 37 | 0.29 | 60 |
| 10 | 10.5 | 10.5 | 0 | 900 | 0.159 | 37 | 0.35 | 72 |
| 24 | 10.5 | 10.5 | 0 | 780 | 0.265 | 37 | 0.36 | 74 |
| 48 | 10.2 | 10.8 | 0.3 | 550 | 0.424 | 0 | 0.34 | 70 |
| 72 | 10.1 | -- | 0 | 850 | 0 | 0 | 0.36 | 74 |
| Total amount added | | | | [g] | 3.180 | 222 | | |
| Amount remaining | | | | [g] | 0.850 | | | |
| Amount consumed | | | | [g] | 2.330 | | | |
| Amount consumed per ton of ore | | | | [kg/t] | 2.330 | | | |
| [#]: as measured in sample taken from bottle<br>[*]: pH after addition of calcium oxide, if any | | | | | | | | |

The gold content of the sample taken after 48 hours had elapsed is lower than the corresponding value observed after 24 hours had elapsed. It is assumed that the value determined after 48 hours had elapsed is erroneous as no other explanation is apparent. For evaluating the overall result of this test run, the gold content of the sample taken after 48 hours had elapsed should not be taken into account.

The total amount of cyanide consumed by gold extraction is calculated taking into account the total amount of cyanide added and the amount of cyanide remaining in the lixiviant medium. The total amount of sodium cyanide consumed is 2.330 g / 0.53 = 4.396 g. The total amount of sodium cyanide consumed per ton of ore is 4.396 kg/ton of ore.

It is found that an amount of 30 ppm of reagent B in the lixiviant medium allows to reach the maximum amount of extracted gold (74 %) after 24 hours of extraction, whereas in the absence of said surfactant and polyether-modified siloxane the same amount of extracted gold was observed only after 72 hours had elapsed. Adding a low amount of reagent B to the lixiviant medium thus allows to reduce the time of contact between the ore and the lixiviant medium. In the present example, the contact time is reduced to 33 %.

The consumption of cyanide in the course of this experiment is shown in more detail in table 5. Furthermore, the surface tension of the lixiviant medium is shown.

Table 5: Cyanide consumption in example 1a

| Time | Cyanide | | | | |
|---|---|---|---|---|---|
| [h] | content[#] [ppm] | added [g] | added (cumulative) [g] | consumed (cumulative) [g] | Surface tension [mN/m] |
| 0 | -- | 0.795 | 0.795 | | |
| 2 | 150 | 0.689 | 1.484 | 0.645 | 70 |
| 4 | 450 | 0.477 | 1.961 | 1.034 | 72 |
| 8 | 600 | 0.371 | 2.332 | 1.361 | 58 |
| 10 | 900 | 0.159 | 2.491 | 1.432 | 49 |
| 24 | 780 | 0.265 | 2.756 | 1.711 | 44 |
| 48 | 550 | 0.424 | 3.180 | 2.206 | 37 |
| 72 | 850 | 0 | 3.180 | 2.330 | 41 |
| [#]: as measured in sample taken from bottle | | | | | |

Taking into account that in example 1a the maximum amount of extracted gold (74 %) was reached after 24 hours of extraction, the amount of cyanide consumed at the point of time at which the maximum amount of gold was extracted from the ore is 1.711 g, equivalent to an amount of sodium cyanide of 1.711 g / 0.53 = 3.228 g. The total amount of sodium cyanide consumed per ton of ore is 3.228 kg/ton of ore. Furthermore, it was unexpectedly observed that the surface tension of the lixiviant medium after 2 and 4 hours of contact with the ore was essentially the same as the surface tension of pure water (72 mN/m). Only after 48 hours of contact with the ore and continues addition of reagent, the surface tension approached a value expected in view of the results shown in table 1.

**Example 1b:** Comparative example 1a was repeated with the only exception that reagent B is added in a higher amount than in example 1a in order to form a lixiviant medium according to the present invention. Specifically, 5 portions of 62 mg, each equivalent to an amount of 51 ppm relative to the amount of ore, one portion of 25 mg and one portion of 24 mg, each equivalent to 20 ppm relative to the amount of ore; resulting in a total amount of 222 mg, equivalent to an amount of 181 ppm relative to the amount of ore were added. This procedure and the results are summarized in table 6.

Table 6: Amount of ingredients and analytical results of example 1b

| Time | pH | | CaO | Cyanide | | Reagent | Gold | |
| [h] | initial[#] | final[*] | added [g] | content[#] [ppm] | added [g] | [mg] | content [ppm] | extracted [%] |
|---|---|---|---|---|---|---|---|---|
| 0 | -- | 10.6 | 5.2 | -- | 0.795 | 62 | -- | -- |
| 2 | 10.0 | 10.8 | 0.5 | 100 | 0.742 | 62 | 0.21 | 41 |
| 4 | 10.7 | 10.7 | 0 | 400 | 0.530 | 62 | 0.27 | 56 |
| 8 | 10.6 | 10.6 | 0 | 780 | 0.265 | 62 | 0.30 | 62 |
| 10 | 10.5 | 10.5 | 0 | 950 | 0.159 | 62 | 0.31 | 64 |
| 24 | 10.4 | 10.7 | 0.3 | 800 | 0.265 | 25 | 0.35 | 72 |
| 48 | 10.0 | 10.6 | 0.3 | 700 | 0.318 | 24 | 0.36 | 74 |
| 72 | 10.0 | -- | 0 | 700 | 0 | 0 | 0.36 | 74 |
| Total amount added | | | | [g] | 3.074 | 359 | | |
| Amount remaining | | | | [g] | 0.700 | | | |
| Amount consumed | | | | [g] | 2.374 | | | |
| Amount consumed per ton of ore | | | | [kg/t] | 2.374 | | | |
| [#]: as measured in sample taken from bottle<br>[*]: pH after addition of calcium oxide, if any | | | | | | | | |

The total amount of cyanide consumed by gold extraction is calculated taking into account the total amount of cyanide added and the amount of cyanide remaining in the lixiviant medium. The total amount of sodium cyanide consumed is 2.374 g / 0.53 = 4.396 g. The total amount of sodium cyanide consumed per ton of ore is 4.479 kg/ton of ore.

It is found that further increasing the amount of said surfactant and polyether-modified siloxane, i.e. to more than 30 ppm, does not result in a further reduction of the time required for extracting the maximum amount of gold (74 %) from the ore. Likewise, the amount of gold extracted from the ore is not further increased.

The consumption of cyanide in the course of this experiment is shown in more detail in table 7. Furthermore, the surface tension of the lixiviant medium is shown.

Table 7: Cyanide consumption in example 1b

| Time | Cyanide | | | | |
| [h] | content[#] [ppm] | added [g] | added (cumulative) [g] | consumed (cumulative) [g] | Surface tension [mN/m] |
|---|---|---|---|---|---|
| 0 | -- | 0.795 | 0.795 | | |
| 2 | 100 | 0.742 | 1.537 | 0.695 | 56 |
| 4 | 400 | 0.530 | 2.067 | 1.137 | 60 |
| 8 | 780 | 0.265 | 2.332 | 1.287 | 46 |
| 10 | 950 | 0.159 | 2.491 | 1.382 | 41 |
| 24 | 800 | 0.265 | 2.756 | 1.691 | 36 |
| 48 | 700 | 0.318 | 3.074 | 2.056 | 36 |
| 72 | 700 | 0 | 3.074 | 2.374 | 37 |
| [#]: as measured in sample taken from bottle | | | | | |

Only after 10 hours of contact with the ore and continues addition of reagent, the surface tension approached a value expected in view of the results shown in table 1.

The period of time and the amount of cyanide required in order to extract the maximum amount of gold (74 %) from the ore as observed in example 1a and 1b as well as in comparative example 1 are compared to each other in table 8.

Table 8: Comparison of gold extraction in example 1a/b as well as comparative example 1

|  | Extraction of maximum amount of gold (74 %) requires | |
| --- | --- | --- |
|  | time [h] | sodium cyanide [kg/t of ore] |
| Comparative example 1 | 72 | 4.191 |
| Example 1a | 24 (relative: 33 %) | 3.002 (relative: 72 %) |
| Example 1 b | 48 | 3.879 (relative: 93 %) |

Thus, using a lixiviant medium containing a non-ionic surfactant and a polyether-modified siloxane (such as reagent B) reduces the period of time as well as the amount of cyanide required in order to extract the maximum amount of gold from the ore. In example 1a, a reduction of time and consumed cyanide to 33 % and 72 %, respectively, is observed as a result of the addition of 30 ppm of said surfactant an said polyether-modified siloxane. No further reduction is observed when the amount of said surfactant an said polyether-modified siloxane is further increased as in example 1b.

**Comparative example 2**

115 kg of gold ore B is charged into a column having an inner diameter of 18.8 cm in order to form a bed of ore powder. The column hence contains a total amount of 115 kg·0.663 g/t = 76 mg of gold. The bed of ore powder reaches a height of 225 cm inside of the column. The column is mounted in an upright position.

An aqueous solution of sodium cyanide (NaCN) having a concentration of cyanide ions of 100 ppm (= 0.01 %, equivalent to 0.19 g of NaCN in 1000 ml of water) is used as the lixiviant medium. The pH of the lixiviant medium is adjusted to 10.7 by adding calcium oxide (CaO) to the lixiviant medium.

The lixiviant medium is supplied to the upper end of the column and fed into the column at an approximate flow rate of about 5 ml per minute. The weight of lixiviant medium fed per day is likewise determined and it is found 6.7 kg of lixiviant medium are fed per day, i.e. it can be calculated that the flow rate averaged over one day is 4.7 ml per minute. The lixiviant medium is allowed to soak the bed of powdered ore and pass through the bed of powdered ore under the impact of gravity. The lixiviant medium having passed the bed of powdered ore in the column is collected at the lower end of the column as the pregnant solution and the content of gold is determined.

The lixiviant medium is continuously fed into the column for 49 days, followed by feeding of water (not containing cyanide) for additional 10 days in order to maintain hydrostatic pressure and expel the lixiviant medium from the column. Thus, feeding of an aqueous medium into the column is carried out for a total of 59 days. Then, feeding of the lixiviant medium is stopped. The pregnant solution is collected until the flow of pregnant solution ceases after two more days, i.e. until day 61 after feeding of lixiviant medium was begun. During the first 4 days, the powdered ore in the column soaks, i.e. lixiviant medium is fed into the column, but no medium exits the column. Since the first drop of the pregnant solution exits the column on day 5, the pregnant solution is collected for 61 - 4 = 57 days in total.

The pregnant solution is collected as one batch per day and the amount of pregnant solution in each batch is determined. The gold content and the content of free cyanide ions (i.e. cyanide ions not bound in a complex gold compound) in each batch are determined. From these data, the corresponding results as shown in table 9 are calculated.

Table 9: Results of comparative example 2

|  | NaCN | Lixiviant medium | Pregnant solution | Gold |
| --- | --- | --- | --- | --- |
| fed into the column | 58.89 g | 395.3 kg | -- | -- |
| collected from the column | 8.06 g | -- | 353.12 kg | 50.29 mg (66%) |
| Consumed:<br>- total<br>- relative to amount fed into column<br>- per ton of ore | 50.83 g<br>86 %<br>442 g/t | | | |

**Example 2**

The same powdered gold ore as in comparative example 2 is used. 115 kg of the powdered ore is charged into a column having an inner diameter of 18.8 cm in order to form a bed of ore powder. The column hence contains a total amount of 115 kg·0.663 g/t = 76 mg of gold. The bed of ore powder reaches a height of about 226 cm inside of the column. The column is mounted in an upright position.

The lixiviant medium used in this example has the same pH and the same concentration of NaCN as described with respect to comparative example 2, the only difference being that the solution in addition contains an amount of 31 ppm of reagent B according to the present invention.

The lixiviant medium is supplied to the upper end of the column and fed into the column at a flow rate of about 5 ml per minute. The weight of lixiviant medium fed per day is likewise determined and it is found 6.7 kg of lixiviant medium are fed per day, i.e. it can be calculated that the flow rate average over one day is 4.7 ml per minute. The lixiviant medium is allowed to soak the bed of powdered ore and pass through the bed of powdered ore under the impact of gravity. The lixiviant medium having passed the bed of powdered ore in the column is collected at the lower end of the column as the pregnant solution and the content of gold is determined.

The lixiviant medium is continuously fed into the column for 49 days, followed by feeding of water (not containing cyanide) for additional 10 days in order to maintain hydrostatic pressure and expel the lixiviant medium from the column. Thus, feeding of an aqueous medium into the column is carried out for a total of 59 days. Then, feeding of the lixiviant medium is stopped. The pregnant solution is collected until the flow of pregnant solution ceases after two more days, i.e. until day 61 after feeding of lixiviant medium was begun. During the first 4 days, the powdered ore in the column soaks, i.e. lixiviant medium is fed into the column, but no medium exits the column. Since the first drop of the pregnant solution exits the column on day 5, the pregnant solution is collected for 61 - 4 = 57 days in total.

The pregnant solution is collected as one batch per day and the amount of pregnant solution in this batch is determined. The gold content and the content of free cyanide ions (i.e. cyanide ions not bound in a complex gold compound) in this batch are determined. The results are shown in table 10.

Table 10: Results of example 2

|  | NaCN | Lixiviant medium | Pregnant solution | Gold |
|---|---|---|---|---|
| fed into the column | 58.75 g | 395.3 kg | -- | -- |
| collected from the column | 11.52 g | -- | 354.31 kg | 52.24 mg (69%) |
| Consumed:<br> - total<br> - relative to amount fed into column<br> - per ton of ore | 47.23 g<br>80 %<br>411 g/t |  |  |  |

The results of example 2 and comparative example 2 are also shown in table 11 in order to allow a direct comparison.

Table 11: Comparison of results of example 2 and comparative example 2

|  | example 2 | comparative example 2 |
|---|---|---|
| Gold collected from the column | 52.24 mg<br>(69 %) | 50.29 mg<br>(66%) |
| NaCN consumed:<br> - relative to amount fed into column<br> - per ton of ore | 80 %<br>411 g/t | 86 %<br>442 g/t |

Strikingly, these data demonstrate that the use of a lixiviant medium according to the present invention in example 2 results in a higher amount of gold being extracted from the powdered ore, while at the same time, the amount of sodium cyanide consumed in the extraction by being bound in a complex gold compound is lower relative to (i) the amount of sodium cyanide fed into the extraction column and (ii) the amount of ore subjected to extraction.

**Comparative example 3**

986 g of the same powdered gold ore as in comparative example 2 is placed in a bottle and a 1.498 litres of water is added in order to form a suspension having a solids content of 40 %. To this content of the bottle, 1.5 g of sodium cyanide, equivalent to 0.795 g of cyanide (based on content of 0.53 g of cyanide per 1 g sodium cyanide), was added such that a solution containing 0.53 g/l (= 531 ppm) of cyanide is obtained. The pH value of the solution is adjusted to 10.6 by adding calcium oxide. The bottle is closed and placed on a laboratory bottle roller and rolled for a period of 72 hours.

A sample is collected from the bottle 4 hours after addition of the ingredients was completed and rolling of the bottle was begun. The content of cyanide not bound in a complex gold compound, the pH value and the gold content of the sample are determined. Further samples are taken and analysed 8 hours, 24 hours, 48 hours and 72 hours after addition of the ingredients was completed and rolling of the bottle was begun.

Additional sodium cyanide is added to the content of the bottle. Likewise, if it is found that the pH is 10.5 or lower, additional calcium oxide is added to the content of the bottle in an amount sufficient to increase the pH to a value of 10.6 to 10.8. This procedure and the results are summarized in table 12.

Table 12: Amount of ingredients and analytical results of comparative example 3

| Time | pH | Cyanide | Gold | |
|---|---|---|---|---|
| [h] | final(*) | consumed [g/kg ore] | content [ppm] | extracted [%] |
| 0 | 11.2 | -- | -- | -- |
| 4 | 10.6 | 0.35 | 0.24 | 54 |
| 8 | 10.8 | 0.44 | 0.28 | 63 |
| 24 | 10.7 | 0.90 | 0.33 | 75 |
| 48 | 10.9 | 1.51 | 0.37 | 82 |
| 72 | 10.5 | 2.25 | 0.38 | 85 |
| (*): pH after addition of calcium oxide, if any | | | | |

**Example 3**

Comparative example 3 was repeated with the only exception being the addition of reagent B in a total amount of 174 mg per litre (= 174 ppm) in order to form a lixiviant medium according to the present invention. This procedure and the results are summarized in table 13.

Table 13: Amount of ingredients and analytical results of example 3

| Time | pH | Cyanide | Gold | |
|---|---|---|---|---|
| [h] | final(*) | consumed [g/kg ore] | content [ppm] | extracted [%] |
| 0 | 11.2 | -- | -- | -- |
| 4 | 10.6 | 0.33 | 0.26 | 59 |
| 8 | 10.8 | 0.55 | 0.30 | 69 |
| 24 | 10.7 | 1.02 | 0.34 | 78 |
| 48 | 10.9 | 1.37 | 0.38 | 85 |
| 72 | 10.5 | 1.72 | 0.38 | 86 |
| (*): pH after addition of calcium oxide, if any | | | | |

It is found that the presence of a non-ionic surfactant and a polyether-modified siloxane in the lixiviant medium allow to reach almost the maximum amount of extracted gold (85 %) after 48 hours of extraction, although 10 % less cyanide has been consumed at his point of time. After 72 hours of extraction, the maximum amount of gold (86 %) has been extracted, although 30 % less cyanide has been consumed at his point of time.

**Claims**

**1.** Composition comprising a non-ionic surfactant and a polyether-modified siloxane, wherein, preferably,

the polyether-modified siloxane consists of structural units selected from the group consisting of type (I), (II), (III), and (IV),

$$[mod\text{-}Si(R^1)_2\text{-}]_{t1} \qquad (I),$$

$$[(R^1)_3Si\text{-}]_{t2} \qquad (II),$$

$$[\text{-}O\text{-}Si(mod)(R^1)\text{-}]_m \qquad (III),$$

$$[\text{-}O\text{-}Si(R^1)_2\text{-}]_n, \qquad (IV),$$

wherein

mod represents $\text{-L-O-}[\text{-}A_x\text{\textasciitilde}B_y\text{\textasciitilde}C_z\text{-}]^{\#}\text{-}R^2$, wherein

A represents a structural unit having the formula $\text{-CH}(R^3)\text{-CH}(R^4)\text{-O-}$ ,
B represents a structural unit having the formula $\text{-CH}_2\text{-CH}_2\text{-O-}$,
C represents a structural unit having the formula $\text{-CH}(R^5)\text{-CH}(R^6)\text{-O-}$,
x represents the number of the structural units of A and takes a value in the range of 0-50,
y represents the number of the structural units of B and takes a value in the range of 0-50,
z represents the number of the structural units of C and takes a value in the range of 0-50,

wherein $x + y + z > 1$,
$[\text{-}A_x\text{\textasciitilde}B_y\text{\textasciitilde}C_z\text{-}]^{\#}$ is independently selected in each occurrence from the group consisting of

• a copolymer consisting of x structural units A, y structural units B and z structural units C arranged in a statistical sequence,
• a copolymer consisting of structural units $A_x$, $B_y$ and $C_z$ arranged in a block structure represented by $(@LO)\text{-}(A_x)\text{-}(B_y)\text{-}(C_z)\text{-}(@R^2)$,
• a copolymer consisting of structural units $A_x$, $B_y$ and $C_z$ arranged in a block structure represented by $(@LO)\text{-}(C_z)\text{-}(B_y)\text{-}(A_x)\text{-}(@R^2)$,
• a copolymer consisting of structural units $A_x$, $B_y$ and $C_z$ arranged in a block structure represented by $(@LO)\text{-}(A_x)\text{-}(C_z)\text{-}(B_y)\text{-}(@R^2)$,
• a copolymer consisting of structural units $A_x$, $B_y$ and $C_z$ arranged in a block structure represented by $(@LO)\text{-}(B_y)\text{-}(C_z)\text{-}(A_x)\text{-}(@R^2)$,
• a copolymer consisting of structural units $A_x$, $B_y$ and $C_z$ arranged in a block structure represented by $(@LO)\text{-}(C_z)\text{-}(A_x)\text{-}(B_y)\text{-}(@R^2)$, and
• a copolymer consisting of structural units $A_x$, $B_y$ and $C_z$ arranged in a block structure represented by $(@LO)\text{-}(B_y)\text{-}(A_x)\text{-}(C_z)\text{-}(@R^2)$,
wherein $(@LO)$ indicates the terminus of the copolymer that is bonded to the structural unit represented by $\text{-L-O-}$ and $(@R^2)$ indicates the terminus of the copolymer that is bonded to the structural unit represented by $\text{-}R^2$,

L is a single bond or a linear or branched alkylene group having 1-10 carbon atoms,
$R^2$ represents H, a linear or branched alkyl group having 1-6 carbon atoms or a group $\text{-C}(\text{=O})\text{-}R^7$, wherein $R^7$ represents a linear or branched alkyl group having 1-6 carbon atoms,
one of $R^3$ and $R^4$ represents H and the other one represents a methyl group,
one of $R^5$ and $R^6$ represents H and the other one represents a linear or branched alkyl group having 2 or 3 carbon atoms, and
$R^1$ independently represents a linear or branched alkyl chain having 1-6 carbon atoms,
m represents the number of the structural units of formula (III) present in the polyether-modified siloxane and takes a value in the range of 0-100,
n represents the number of the structural units of formula (IV) present in the polyether-modified siloxane and takes a value in the range of 0-500,
t1 represents the number of the structural units of formula (I) present in the polyether-modified siloxane and takes a value in the range of 0-2,
t2 represents the number of the structural units of formula (II) present in the polyether-modified siloxane and takes a value in the range of 0-2,

wherein

t1 + t2 = 2,
t1 + m $\geq$ 1, and
m + n $\geq$ 1;

and/or
the non-ionic surfactant has a chemical constitution according to general formula (V)

$$R^8\text{-}O\text{-}[\text{-}D_p\text{\textasciitilde}E_q\text{\textasciitilde}F_r\text{-}]^\#\text{-}H \qquad (V),$$

wherein

$R^8$ represents a linear or branched alkyl group having 4-22 carbon atoms,
D represents a structural unit having the formula -CH($R^9$)-CH($R^{10}$)-O- ,
E represents a structural unit having the formula -CH$_2$-CH$_2$-O- ,
F represents a structural unit having the formula -CH($R^{11}$)-CH($R^{12}$)-O- ,
p represents the number of structural units D and takes a value in the range of 0-10,
q represents the number of structural units E and takes a value in the range of 3-50,
r represents the number of structural units F and takes a value in the range of 0-40,
one of $R^9$ and $R^{10}$ represents H and the other one represents a linear or branched alkyl group having 1-4 carbon atoms,
one of $R^{11}$ and $R^{12}$ represents H and the other one represents a linear or branched alkyl group having 1-4 carbon atoms,
$[\text{-}D_p\text{\textasciitilde}E_q\text{\textasciitilde}F_r\text{-}]^\#$ is independently selected in each occurrence from the group consisting of

• a copolymer consisting of p structural units D, q structural units E and r structural units F arranged in a statistical sequence,
• a copolymer consisting of structural units $D_p$, $E_q$ and $F_r$ arranged in a block structure represented by (@$R^8$O)-($D_p$)-($E_q$)-($F_r$)-(@H),
• a copolymer consisting of structural units $A_x$, $B_y$ and $C_z$ arranged in a block structure represented by (@$R^8$O)-($F_r$)-($E_q$)-($D_p$)-(@H),
• a copolymer consisting of structural units $A_x$, $B_y$ and $C_z$ arranged in a block structure represented by (@$R^8$O)-($D_p$)-($F_r$)-($E_q$)-(@H),
• a copolymer consisting of structural units $A_x$, $B_y$ and $C_z$ arranged in a block structure represented by (@$R^8$O)-($E_q$)-($F_r$)-($D_p$)-(@H),
• a copolymer consisting of structural units $A_x$, $B_y$ and $C_z$ arranged in a block structure represented by (@$R^8$O)-($F_r$)-($D_p$)-($E_q$)-(@H), and
• a copolymer consisting of structural units $A_x$, $B_y$ and $C_z$ arranged in a block structure represented by (@$R^8$O)-($E_q$)-($D_p$)-($F_r$)-(@H),

wherein (@$R^8$O) indicates the terminus of the copolymer that is bonded to the structural unit represented in formula (V) by $R^8$O- and (@H) indicates the terminus of the copolymer that is bonded to the structural unit represented in formula (V) by -H.

2. Composition according to claim 1, wherein
L represents a linear or branched alkylene group having 2-6 carbon atoms, preferably 3 or 4 carbon atoms;
and/or
$R^1$ independently represents a linear or branched alkyl chain having 1-4 carbon atoms, preferably methyl;
and/or
$R^2$ represents a linear or branched alkyl group having 1-4 carbon atoms or $R^2$ represents a group -C(=O)-$R^7$, wherein $R^7$ represents a linear or branched alkyl group having 1-4 carbon atoms.

3. Composition according to claim 1 or claim 2, wherein
one of $R^5$ and $R^6$ represents H and the other one represents ethyl, wherein x preferably represents a value in the range of 1-40;
and/or
y represents a value in the range of 1-40;

and/or

z is 0.

4. Composition according to any one of claims 1-3, wherein m represents a value in the range of 1-100 and/or n represents a value in the range of 1-400, wherein, preferably, n and m fulfil the relation $15 \leq n + m \leq 150$.

5. Composition according to any one of claims 1-4, wherein

x represents a value in the range of 20-30,

y represents a value in the range of 0-5,

z represents 0,

L represents a linear alkylene group having 3 carbon atoms,

$R^1$ represents methyl,

$R^2$ is selected from H, and a linear or branched alkyl group having 1-4 carbon atoms,

m represents 1-5,

n represents 20-30,

t1 represents 2,

t2 represents 0.

6. Composition according to any one of claims 1-5, wherein

$R^8$ is a linear or branched alkyl group having 8-18 carbon atoms, preferably a linear or branched alkyl group having 10-16 carbon atoms;

and/or

p takes a value in the range of 0-5,

and/or

q takes a value in the range of 4-20,

and/or

r takes a value in the range of 1-25.

7. Composition according to any one of claims 1-6, wherein

$R^8$ represents is a linear or branched alkyl group having 11-13 carbon atoms,

one of $R^9$ and $R^{10}$ represents H and the other one represents methyl,

p represents a value in the range of 0-10,

q represents a value in the range of 5-15, and

r is 0.

8. Method of preparing a lixiviant medium comprising the step of mixing

(i) a composition as defined in any one of claims 1-7,

(ii) an alkali metal cyanide,

(iii) a pH regulator suitable setting the pH of the composition to a value of 9 or higher, and

(iv) water.

9. Lixiviant medium comprising

(i) a composition as defined in any one of claims 1-7,

(ii) an alkali metal cyanide,

(iii) a pH regulator suitable setting the pH of the composition to a value of 9 or higher, and

(iv) water.

10. Lixiviant medium according to claim 9, wherein the content of said composition (i) and said alkali metal cyanide is 2000 ppm or less relative to the total weight of the lixiviant medium.

11. Method of extracting gold from a gold-containing solid material, said method comprising the steps of

(a) contacting a gold-containing solid material in the presence of an oxidizing agent with a lixiviant medium as defined in claim 9 or claim 10 such that a mother liquor enriched in a gold cyanide compound and a solid material having a reduced content of gold are obtained, and

(b) separating the mother liquor obtained in step (a) from the solid material having a reduced content of gold.

**12.** Method of extracting gold according to claim 11, wherein
said step (a) of contacting a gold-containing solid material in the presence of an oxidizing agent with a lixiviant medium such that a mother liquor enriched in a gold cyanide compound and a solid material having a reduced content of gold are obtained comprises

> (a-1) forming a layer of said gold-containing solid material in particulate form on a surface impermeable to liquid water, and
> (a-2) allowing said lixiviant medium to percolate said layer of said gold-containing solid material such that a mother liquor enriched in a gold cyanide compound and a solid material having a reduced content of gold are obtained,

and said step (b) of separating the mother liquor obtained in step (a) from the solid material having a reduced content of gold comprises
(b-1) collecting the mother liquor enriched in a gold cyanide compound from the surface impermeable to liquid water.

**13.** Method of extracting gold according to claim 12, wherein said step (a-2) is followed by a step (a-3) of allowing a second lixiviant medium to percolate said layer of said gold-containing solid material such that a mother liquor enriched in a gold cyanide compound and a solid material having a reduced content of gold are obtained, wherein said second lixiviant medium comprises

> (i) an alkali metal cyanide,
> (ii) a pH regulator suitable setting the pH of the composition to a value of 9 or higher,
> (iii) water, and
> wherein said second lixiviant medium does not contain a polyether-modified siloxane as defined in any one of claims 1-7.

**14.** Method of extracting gold according to claim 13, wherein said steps (a-2) and (a-3) are carried out over a period t of 30-80 days, wherein the said step (a-2) is carried out for a period of time of 5-50 % of t.

**15.** Use of a lixiviant medium as defined in claim 9 or claim 10 for extracting gold from a a gold-containing solid material.

Europäisches
Patentamt

European
Patent Office

Office européen
des brevets

# EUROPEAN SEARCH REPORT

Application Number

EP 20 19 0793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 167 502 A1 (DOW CORNING [US]) 2 January 2002 (2002-01-02) | 1-7 | INV. C22B11/08 |
| A | * paragraphs [0011] - [0039]; examples 2,3 * | 8-15 | B01D19/04 C11D1/722 |
| | ----- | | C11D3/37 |
| A,D | US 2008/196546 A1 (SEELMANN-EGGEBERT HANS-PETER [DE] ET AL) 21 August 2008 (2008-08-21) * paragraphs [0227] - [0256]; tables 1-4 * * paragraphs [0117] - [0145] * | 1-15 | B03D1/004 |
| | ----- | | |
| A | US 4 929 274 A (LUTTINGER LIONEL B [US]) 29 May 1990 (1990-05-29) * column 2, line 13 - column 4, line 63; tables 1,2 * | 1-15 | |
| | ----- | | |

|  | TECHNICAL FIELDS SEARCHED (IPC) |
|---|---|
|  | C22B C11D B03D F17C B01D |

The present search report has been drawn up for all claims

| Place of search | Date of completion of the search | Examiner |
|---|---|---|
| The Hague | 22 January 2021 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 19 0793

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2021

| Patent document cited in search report | | | Publication date | Patent family member(s) | | | Publication date |
|---|---|---|---|---|---|---|---|
| EP 1167502 | A1 | | 02-01-2002 | AT | 265516 | T | 15-05-2004 |
| | | | | DE | 60102980 | T2 | 04-05-2005 |
| | | | | EP | 1167502 | A1 | 02-01-2002 |
| | | | | JP | 5005859 | B2 | 22-08-2012 |
| | | | | JP | 2002088397 | A | 27-03-2002 |
| US 2008196546 | A1 | | 21-08-2008 | AR | 051861 | A1 | 14-02-2007 |
| | | | | AT | 516376 | T | 15-07-2011 |
| | | | | AU | 2005321515 | A1 | 06-07-2006 |
| | | | | BR | PI0519249 | A2 | 06-01-2009 |
| | | | | CA | 2592095 | A1 | 06-07-2006 |
| | | | | CN | 101107371 | A | 16-01-2008 |
| | | | | EP | 1831414 | A1 | 12-09-2007 |
| | | | | ES | 2367364 | T3 | 02-11-2011 |
| | | | | NZ | 555807 | A | 24-12-2009 |
| | | | | PE | 20060901 | A1 | 18-10-2006 |
| | | | | PL | 1831414 | T3 | 30-12-2011 |
| | | | | RU | 2375477 | C2 | 10-12-2009 |
| | | | | US | 2008196546 | A1 | 21-08-2008 |
| | | | | WO | 2006069738 | A1 | 06-07-2006 |
| US 4929274 | A | | 29-05-1990 | AU | 614689 | B2 | 05-09-1991 |
| | | | | CA | 2012971 | A1 | 07-12-1990 |
| | | | | CN | 1047887 | A | 19-12-1990 |
| | | | | MX | 164101 | B | 15-07-1992 |
| | | | | US | 4929274 | A | 29-05-1990 |
| | | | | ZA | 902471 | B | 30-01-1991 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080196546 A1
- WO 2006069738 A1
- US 20030192403 A1, P. Burgmayer
- WO 2014170448 A1

**Non-patent literature cited in the description**

- Ullmann's Encyclopedia. 2000, vol. 4.2
- Kirk-Othmer, Enzyclopedia of Chemical Technology. vol. 11, 972-992
- KIRK-OTHMER, ENZYCLOPEDIA OF CHEMICAL TECHNOLOGY. vol. 21, 1-15